# EUROPEAN PATENT APPLICATION

(11) **EP 4 553 921 A2**
(43) Date of publication of application: **14.05.2025**
(21) Application number: 24211614.3
(22) Date of filing: 08.11.2024
(51) Int. Cl.: H01M 4/136, H01M 4/1397, H01M 4/36, H01M 4/58, H01M 4/62, H01M 4/66, H01M 10/052, H01M 10/0562, H01M 4/02

(54) **CATHODE ACTIVE MATERIAL, CATHODE INCLUDING THE SAME, ALL SOLID SECONDARY BATTERY INCLUDING THE SAME, AND METHOD OF PREPARING CATHODE ACTIVE MATERIAL**

(30) Priority: 10.11.2023 KR 20230155602
(71) Applicant: SAMSUNG SDI CO., LTD., Yongin-si, Gyeonggi-do 17084 (KR)
(72) Inventor: Shim, Kyueun, 17084 Gyeonggi-do (KR); Lim, Hyungsub, 17084 Gyeonggi-do (KR); Jo, Sungnim, 17084 Gyeonggi-do (KR); Son, Inhyuk, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

A cathode active material, a cathode including the cathode active material, an all-solid secondary battery including the cathode, and a method of preparing the cathode active material are provided. The cathode active material includes primary particles including a Li₂S-containing composite, secondary particles including the primary particles agglomerated therein, wherein a D10 size of the secondary particles is 5 µm or more.

## Description

### CROSS-REFERENCE TO RELATED APPLICATION

The present application claims priority to and the benefit of Korean Patent Application No. 10-2023-0155602, filed on November 10, 2023, in the Korean Intellectual Property Office, the entire content of which is hereby incorporated by reference.

### BACKGROUND

### 1. Field

One or more embodiments of the present disclosure relate to a cathode active material, a cathode including the cathode active material, an all-solid secondary battery including the cathode, and a method of preparing a cathode active material.

### 2. Description of the Related Art

In line with recent developments and market demands in the industry, batteries with relatively high energy density and stability are actively being pursued and developed. For example, lithium batteries are utilized for one or more suitable purposes in information devices, communication devices, automobiles, and/or the like. In automobiles, safety is greatly emphasized as it directly affects human well-being.

Lithium batteries employing liquid electrolytes may be more susceptible to fires and/or explosions due to short circuits. All-solid secondary batteries, which employ solid electrolytes instead of liquid electrolytes, have been proposed. Compared to liquid electrolytes, solid electrolytes may be less likely to cause fires.

Therefore, by employing solid electrolytes instead of liquid electrolytes, an all-solid secondary battery may have a reduced risk of fire or explosion. A solid battery may provide improved safety.

### SUMMARY

Aspects of one or more embodiments of the present disclosure relate to a cathode active material in which the proportion of fine particles having a small particle size is reduced, a cathode including the cathode active material, and an all-solid secondary battery.

Aspects of one or more embodiments of the present disclosure relate to a method of preparing the cathode active material in which the proportion of fine particles having a small particle size is reduced.

Additional aspects will be set forth in part in the description which follows and, in part, will be apparent from the description, or may be learned by practice of the presented embodiments of the present disclosure.

According to one or more embodiments of the present disclosure, a cathode active material includes secondary particles in which primary particles including a Li₂S-containing composite are agglomerated,

wherein a D10 size (*e.g.,* diameter or major axis) of the secondary particles is 5 µm or more.

According to one or more embodiments of the present disclosure, a cathode for an all-solid secondary battery includes a cathode current collector, and a cathode active material layer on the cathode current collector and including the cathode active material.

According to one or more embodiments of the present disclosure, an all-solid secondary battery includes a cathode; an anode; and a solid electrolyte layer arranged between the cathode and the anode, wherein the cathode includes the cathode for an all-solid secondary battery described above.

According to one or more embodiments of the present disclosure, a method of preparing a composite cathode active material includes: preparing primary particles including a Li₂S-containing composite by ball-milling a composition containing Li₂S; and preparing secondary particles (*e.g.,* each of the secondary particles) by granulation of the primary particles, wherein a D10 size (*e.g.,* diameter or major axis) of the secondary particles is 5 µm or more.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1 is a schematic cross-sectional view of an all-solid secondary battery according to one or more embodiments of the present disclosure;
FIG. 2 is a schematic cross-sectional view of an all-solid secondary battery according to one or more embodiments of the present disclosure;
FIG. 3 is a schematic cross-sectional view of an all-solid secondary battery according to one or more embodiments of the present disclosure;
FIG. 4 is a schematic cross-sectional view of an all-solid secondary battery according to one or more embodiments of the present disclosure; and
FIG. 5 is a schematic cross-sectional view of an all-solid secondary battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Reference will now be made in more detail to one or more embodiments, examples of which are illustrated in the accompanying drawings, wherein like reference numerals refer to like elements throughout, and duplicative descriptions thereof may not be provided. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Accordingly, the embodiments are merely described below, by referring to the drawings, to explain aspects of the present description.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the specification and/or the relevant art, and should not be interpreted in an idealized or an overly formal sense, unless expressly so defined herein.

Embodiments are described herein with reference to cross section illustrations that are schematic illustrations of idealized embodiments. As such, variations from the illustrated shapes as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, angles that are illustrated as being sharp may be rounded. Thus, the regions illustrated in the drawings are schematic in nature and their shapes are not intended to illustrate the precise shape of a region and are not intended to limit the scope of the present disclosure. In the drawings, the relative sizes of elements, layers, and regions may be exaggerated for clarity.

It will be understood that when an element, such as a layer, film, region or substrate, is referred to as being "on," "connected to," or "over" another element, it can be directly on, connected to, or over the other element, or one or more intervening elements may be present. In contrast, when an element is referred to as being "directly on" or "directly over" another element, there are no intervening elements present. In addition, it will also be understood that when an element is referred to as being "between" two elements, it can be the only element between the two elements, or one or more intervening elements may also be present.

It will be understood that, although the terms "first", "second," "third," etc., may be used herein to describe various elements, components, regions, layers, and/or sections, these elements, components, regions, layers, and/or sections should not be limited by these terms. These terms are only used to distinguish one element, component, region, layer, or section, from another element, component, region, layer, or section. For example, a first element, component, region, layer, or section described below could be termed a second element, component, region, layer, or section, without departing from the spirit and scope of the present disclosure.

The terminology used herein is for the purpose of describing particular embodiments only and is not intended to be limiting of the present disclosure. As used herein, the singular forms "a", "an" and "the" are intended to include the plural forms as well, including "at least one", unless the context clearly indicates otherwise. The term "at least one" should not be interpreted as being limited to a singular form. It will be further understood that the terms "comprises" and/or "comprising," or "includes," "including," "have," and/or "having," when used in this specification, specify the presence of the stated features, regions, integers, steps, operations, elements, and/or components, but do not preclude the presence or addition of one or more other features, regions, integers, steps, operations, elements, components, and/or groups thereof.

Furthermore, spatially relative terms, such as "lower", "bottom", "below," "upper", "top", "above" and the like, may be used herein for ease of explanation to describe one element or feature's relationship to another element(s) or feature(s) as illustrated in the drawings. It will be understood that spatially relative terms are intended to encompass different orientations of the device while the device is in use or operated, in addition to the orientation depicted in the drawings. For example, if the device in one of the drawings is turned over, elements described as being on the "lower" or "bottom" side of other elements would then be oriented on the "upper" or "top" side of the other elements. Therefore, example terms such as "lower" can therefore encompass both an orientation of "lower" and "upper". The device may be placed in other orientations (may be rotated by 90 degrees or in a different direction), and spatially relative terms used herein may be interpreted accordingly.

"Group" refers to a group in the Periodic Table of Elements of the Elements according to the 1-18 Group numbering system by the International Union of Pure and Applied Chemistry ("IUPAC").

Unless the context clearly indicates otherwise, the term "diameter," "particle size," or "particle diameter" as used herein refers to an average particle diameter if the particle is spherical, and refers to an average major axis length if the particle is non-spherical. The particle diameter may be measured utilizing a particle size analyzer (PSA). The term "particle size" or "particle diameter" refers to, for example, an average particle diameter. The term "average particle diameter" as used herein refers to, for example, a median particle diameter (D50).

D50 (*e.g.,* D50 size) may refer to the average diameter (or size) of particles whose cumulative volume corresponds to 50 vol% in the particle size distribution (*e.g.,* cumulative distribution), and refers to the value of the particle size corresponding to 50% from the smallest particle when the total number of particles is 100% in the distribution curve accumulated in the order of the smallest particle size to the largest particle size as measured by a laser diffraction method.

D90 (*e.g.,* D90 size) may refer to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size as measured by a laser diffraction method.

D10 (*e.g.,* D10 size) may refer to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size as measured by a laser diffraction method.

As used herein, the term "metal" refers to both metals and metalloids such as silicon and germanium, in an elemental or ionic state.

As used herein, the term "alloy" refers to a mixture of two or more metals.

As used herein, the term "electrode active material" refers to an electrode material capable of undergoing lithiation and delithiation.

As used herein, the term "composite cathode active material" refers to a cathode material capable of undergoing lithiation and delithiation.

As used herein, the term "anode active material" refers to an anode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of removing lithium from an electrode active material.

As used herein, the terms "charging" and "to charge" refer to a process of providing electrochemical energy to a battery.

As used herein, the terms "discharging" and "to discharge" refer to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

While specific examples are described herein, there may be alternatives, modifications, variations, improvements, and substantial equivalents of the examples disclosed herein, including those that are not presently foreseen or appreciated, that may be recognized by applicants or those skilled in the art. Accordingly, the appended claims as filed and as they can be amended are intended to embrace all such alternatives, modifications, variations, improvements and substantial equivalents.

Hereinbelow, a cathode active material, a cathode including the cathode active material, an all-solid secondary battery including the cathode, and a method of preparing a cathode active material according to one or more embodiments will be described in greater detail.

### Cathode Active Material

A cathode active material according to one or more embodiments may include secondary particles in which primary particles containing a Li₂S-containing composite are agglomerated, and a D10 size of the secondary particles may be 5 µm or more.

For example, as the D10 of the secondary particles is adjusted to 5 µm or more, which leads to a decrease of the proportion of fine particles, side reactions caused by such fine particles may be suppressed or reduced. The composite cathode active material, due to enhanced contact between Li₂S-containing composites, may also have improved ionic conductivity and electronic conductivity. For example, by preparing primary particles including a Li₂S-containing composite, and then agglomerating such primary particles to prepare secondary particles, the cathode active material may have a decreased proportion of fine particles included in the cathode active material, and as a result, the D10 of the secondary particles may be 5 µm or more.

For example, although the method of agglomerating the primary particles into secondary particles is not limited, the primary particles including a Li₂S-containing composite may be granulated by utilizing a mixer such as NOBILTA MINI by Hosokawa Micron Corp., NARA hybridization system by NARA, and/or the like, to thereby produce the secondary particles.

According to one or more embodiments, the D10 of the secondary particles may be 5 µm to 10 µm, D50 of the secondary particles may be 9 µm to 20 µm, and D90 of the secondary particles may be 16 µm to 55 µm. For example, D10 of the secondary particles may be 5 µm to 9 µm. For example, D50 of the secondary particles may be 10 µm to 20 µm. For example, D90 of the secondary particles may be 20 µm to 55 µm, 30 µm to 55 µm, 32 µm to 55 µm, or 32 µm to 51 µm.

For example, the D10, D50, and D90 particle sizes may be measured utilizing a measurement device utilizing a laser diffraction technique or a dynamic light scattering technique. For example, the D10 particle diameter may be a value of median particle diameter (D10) at a cumulative percentage of 10 % from the smallest particle size based on volume, as measured by a laser scattering particle size distribution analyzer (for example, LA-920 manufactured by HORIBA). For example, the D50 particle diameter may be a value of median particle diameter (D50) at a cumulative percentage of 50 % from the smallest particle size based on volume, as measured by a laser scattering particle size distribution analyzer (for example, LA-920 manufactured by HORIBA). For example, the D90 particle diameter may be a value of median particle diameter (D90) at a cumulative percentage of 90 % from the smallest particle size based on volume, as measured by a laser scattering particle size distribution analyzer (for example, LA-920 manufactured by HORIBA).

According to one or more embodiments, the Li₂S-containing composite may include a composite of Li₂S and a lithium salt.

For example, the composite of Li₂S and a lithium salt has ductility and is thus distinct from comparable or related art oxide-based solid electrolytes that have brittleness, for example, from oxide-based solid electrolytes with a garnet structure. The composite of Li₂S and a lithium salt, due to having lithium ion conductivity, may thus be differentiated from comparable or related art lithium-free metal oxides that do not have lithium ion conductivity, *e.g.,* alumina. The composite of Li₂S and a lithium salt may be, for example, a product of mechanical milling of Li₂S and the lithium salt. The composite of Li₂S and a lithium salt may be, for example, a product of a mechanochemical reaction between Li₂S and the lithium salt, and may thus be differentiated from a simple mixture of Li₂S and the lithium salt. The simple mixture of Li₂S and a lithium salt, due to failing to maintain dense interfaces between Li₂S and the lithium salt, may provide relatively high interfacial resistance and as a result, may cause an increase in the internal resistance of the solid electrolyte separator.

The composite of Li₂S and a lithium salt may be expressed as Li₂S-LiₐX_{b} (1≤a≤5, 1≤b≤5). In this formula, X may be I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCl, NCl₂, BN₂, and/or any suitable combination thereof, a may be, for example, 1, 2, 3, 4 or 5, and b may be, for example, 1, 2, 3, 4 or 5. The lithium salt may be, for example, a compound that does not contain sulfur (S).

According to one or more embodiments, the lithium salt may be a binary compound or a ternary compound. The lithium salt may be, for example, a binary compound composed of lithium and one element of (*e.g.,* selected from among) Groups 13 to 17 of the Periodic Table of the Elements. The lithium salt may be, for example, a ternary compound composed of lithium and two elements of (*e.g.,* selected from among) Groups 13 to 17 of the Periodic Table of the Elements. The binary compound may include, for example, Lil, LiBr, LiCl, LiF, LiH, Li₂O, Li₂Se, Li₂Te, LisN, LisP, Li₃As, Li₃Sb, Li₃Al₂, LiBs, and/or any suitable combination thereof. Because the composite includes such a binary compound, the ionic conductivity of the composite may further improve. With the solid electrolyte separator including the composite, the internal resistance of the cathode may further decrease. As a result, the cycling performance of an all-solid secondary battery including the cathode may further improve.

The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, and/or any suitable combination thereof. Because the composite includes such a ternary compound, the ionic conductivity of the composite may further improve. Because the composite cathode active material includes such a composite, the internal resistance of the cathode may further decrease. As a result, the cycling performance of an all-solid secondary battery that includes the solid electrolyte separator may further improve.

According to one or more embodiments, the molar ratio of Li₂S to lithium salt in the Li₂S-containing composite may be, for example, 50:50 to 95:5, 60:40 to 95:5, 60:40 to 90:10, 65:35 to 90:10, 65:35 to 85:15, or 70:30 to 85:15. The molar ratio of Li₂S to lithium salt in the Li₂S-containing composite may be, for example, 50:50 to 95:5, 50:50 to 90:10, 50:50 to 85:15, 50:50 to 80:20, 50:50 to 75:25, or 50:50 to 70:30. If (*e.g.,* when) the molar ratio of Li₂S to lithium salt is in the aforementioned ranges, the cycling performance of an all-solid secondary battery including the composite cathode active material may further improve. If (*e.g.,* when) the molar fraction of Li₂S is excessively (or relatively) high, the effect of the lithium salt on improving ionic conductivity may be negligible. If (*e.g.,* when) the molar fraction of Li₂S is excessively (or relatively) high, the energy density of a lithium battery that includes the composite cathode active material may decrease.

The Li₂S-containing composite may further include a carbon-based material. The Li₂S-containing composite may be a composite of Li₂S, a lithium salt, and a carbon-based material.

The carbon-based material may be, for example, any carbon-containing material available as a conductive material in the art. The carbon-based material may be, for example, crystalline carbon, amorphous carbon, and/or any suitable combination thereof. The carbon-based material may be, for example, a fired product of a carbon precursor. The carbon-based material may be, for example, a carbon nanostructure (*e.g.,* a structure in a nanometer scale). Examples of the carbon nanostructure may include a one-dimensional carbon nanostructure, a two-dimensional carbon nanostructure, a three-dimensional carbon nanostructure, and/or any suitable combination thereof. Examples of the carbon nanostructure may include carbon nanotubes, carbon nanofibers, carbon nanotubes, carbon nanorods, graphene, and/or any suitable combination thereof. The carbon-based material may be, for example, a porous carbon-based material or a non-porous carbon-based material. The porous carbon-based material may contain, for example, a periodic and regular two-dimensional or three-dimensional pore. Examples of the porous carbon-based material may include carbon black such as Ketjen black, acetylene black, Denka black, thermal black, and channel black; and graphite, activated carbon, and/or any suitable combination thereof. The form of the carbon-based material may be a particulate form (in the form of particles), a sheet form (in the form of sheets), a flake form (in the form of flakes), and/or the like, but without being limited thereto, and any suitable material generally available and/or generally utilized as carbon-based material in the art may be utilized.

The carbon-based material may include, for example, a fibrous carbon-based material. Because the composite of Li₂S, lithium salt, and carbon-based material includes a fibrous carbon-based material, the electronic conductivity of the composite of Li₂S, lithium salt, and carbon-based material may further improve. Because the composite of Li₂S, lithium salt, and carbon-based material includes a fibrous carbon-based material, electron conduction may be more easily carried out (may more easily occur) from the surface of the composite of Li₂S, lithium salt, and carbon-based material to the inside of the composite of Li₂S, lithium salt, and carbon-based material. The internal resistance of a dry cathode film including the composite of Li₂S, lithium salt, and carbon-based material may decrease, and the cycling performance of an all-solid secondary battery including the dry cathode film may further improve.

For example, the fibrous carbon-based material may have an aspect ratio (e.g., a ratio of length to width in an image of the carbon-based material) of 2 or more, 3 or more, 4 or more, 5 or more, 10 or more, or 20 or more. For example, the fibrous carbon-based material may have an aspect ratio of 2 to 30, 3 to 30, 4 to 30, 5 to 30, 10 to 30, or 20 to 30. For example, the fibrous carbon-based material may have an aspect ratio of 2 to 30, 2 to 20, 2 to 10, 2 to 8, 2 to 5, or 2 to 4. Because the fibrous carbon-based material has an aspect ratio in the aforementioned ranges, the overall electron conductivity of the composite of Li₂S, lithium salt, and carbon-based material may improve, and local irregularities of electronic conductivity within the composite of Li₂S, lithium salt, and carbon-based material may be further mitigated.

The fibrous carbon-based material may include, for example, a carbon nanostructure (*e.g.,* a structure in a nanometer scale). The carbon nanostructures may include, for example, carbon nanofibers (CNF), carbon nanotubes (CNT), carbon nanobelts, carbon nanorods, and/or any suitable combination thereof.

The carbon nanostructures may form a primary carbon nanostructure including (*e.g.,* consisting of) one carbon nanostructure, and a secondary carbon nanostructure in which a plurality of carbon nanostructures are aggregated (*e.g.,* agglomerated).

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and/or major axis length of the primary carbon nanostructure may be measured from a scanning electron microscope (SEM) image or a transmission electron microscope (TEM) image. In one or more embodiments, the diameter and/or major axis length of the primary carbon nanostructure may be measured by a laser diffraction method.

The secondary carbon nanostructure may be a structure formed by assembling the primary carbon nanostructure to form a bundle type or kind or a rope type or kind, in whole or in part. The secondary carbon nanostructure may be, for example, a bundle-type or kind carbon nanostructure, a rope-type or kind carbon nanostructure, and/or any suitable combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanostructure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from an SEM image or an optical microscope image. In one or more embodiments, the diameter and/or length of the secondary carbon nanostructure may be measured by a laser diffraction method. For example, a secondary carbon nanostructure may be dispersed in a solvent and/or the like to thereby transform it to a primary carbon nanostructure, and then utilized in preparation of a composite of Li₂S, a lithium salt, and a carbon-based material.

In the composite of Li₂S, a lithium salt, and a carbon-based material, the content (e.g., amount) of the lithium salt may be, for example, 1 wt% to 40 wt%, 5 wt% to 35 wt%, 10 wt% to 35 wt%, 15 wt% to 35 wt%, 20 wt% to 35 wt%, or 25 wt% to 35 wt%, with respect to the total weight of the composite of Li₂S, the lithium salt, and the carbon-based material. If (*e.g.,* when) the content (*e.g.,* amount) of the lithium salt excessively (or substantially) increases, the energy density of an all-solid secondary battery may decrease. If (*e*.g., when) the content (*e.g.,* amount) of the lithium salt is too low, the ionic conductivity of the composite of Li₂S, a lithium salt and carbon-based material may deteriorate, increasing the internal resistance of a dry cathode film. As a result, the cycling performance of an all-solid secondary battery including the dry cathode film may deteriorate.

In the composite of Li₂S, a lithium salt, and a carbon-based material, the molar ratio of Li₂S to lithium salt may be, for example, 50:50 to 95:5, 60:40 to 95:5, 60:40 to 90:10, 65:35 to 90:10, 65:35 to 85:15, or 70:30 to 85:15. In the composite of Li₂S, a lithium salt, and a carbon-based material, the molar ratio of Li₂S to lithium salt may be, for example, 50:50 to 95:5, 50:50 to 90:10, 50:50 to 85:15, 50:50 to 80:20, 50:50 to 75:25, or 50:50 to 70:30. Because the molar ratio of Li₂S to the lithium salt is in the aforementioned ranges, the cycling performance of an all-solid secondary battery including the dry cathode film may further improve. If (*e.g.,* when) the molar fraction of Li₂S is excessively (or relatively) high, the effect of the lithium salt on improving ionic conductivity may be negligible. If (*e.g.,* when) the molar fraction of Li₂S is excessively (or relatively) high, the energy density of a lithium battery that includes the composite cathode active material may decrease.

According to one or more embodiments, the content (*e.g.,* amount) of the carbon-based material included in the composite of Li₂S, a lithium salt, and a carbon-based material may be, for example, 1 wt% to 20 wt%, 5 wt% to 20 wt%, or 10 wt% to 20 wt%, with respect to the total weight of the composite. If (*e.g.,* when) the amount of the carbon-based material excessively (or substantially) increases, the energy density of the dry cathode film and the all-solid secondary battery may deteriorate. If (*e.g.,* when) the content (*e.g.,* amount) of the carbon-based material is excessively (or substantially) decreased, the electronic conductivity of the composite of Li₂S, lithium salt and carbon-based material may decrease, thus increasing the internal resistance of a dry cathode film. As a result, the cycling performance of the all-solid secondary battery may deteriorate.

According to one or more embodiments, the composite of Li₂S and a lithium salt, or the composite of Li₂S, lithium salt, and carbon-based material may include, for example, a solid solution of Li₂S and a lithium salt. Because the composite includes a solid solution of Li₂S and a lithium salt, the ionic conductivity of the composite may increase. For example, because the solid solution of Li₂S and a lithium salt includes lithium ions arranged in Li₂S crystallites, the ionic conductivity of the solid solution of Li₂S and a lithium salt may be improved over the ionic conductivity of Li₂S. As a result, the ionic conductivity of the composite may improve, and the internal resistance of the composite may be reduced. Because the cathode includes the composite, the internal resistance of the cathode may further decrease. As a result, the cycling performance of an all-solid secondary battery including the cathode may further improve.

According to one or more embodiments, the size of Li₂S crystallites, obtained from an XRD spectrum of the composite of Li₂S and a lithium salt, or the composite of Li₂S, lithium salt, and carbon-based material, may be, for example, 30 nm or less, 25 nm or less, or 20 nm or less. The size of Li₂S crystallites obtained from the XRD spectrum of the composite may be, for example, 1 nm to 20 nm, 1 nm to 15 nm, or 3 nm to 10 nm. A decrease in the size of Li₂S crystallites may result in a further increase in a contact surface between Li₂S and the lithium salt. A further increase in the contact surface between Li₂S and the lithium salt may result in a further increase in the ionic conductivity of the composite of Li₂S and the lithium salt. Because the cathode includes the composite, the internal resistance of the cathode may further decrease. As a result, the cycling performance of an all-solid secondary battery including the cathode may further improve.

For example, to address the shortcoming of Li₂S having relatively low ionic conductivity, a composite may be formed with a lithium salt. A composite of Li₂S and a lithium salt, or a composite of Li₂S, a lithium salt, and carbon-based material may provide improved ionic conductivity compared to Li₂S utilized alone. The content (*e.g.,* amount) of Li₂S in the Li₂S-containing composite may be 50 wt% to 95 wt%, 50 wt% to 90 wt%, 50 wt% to 80 wt%, or 50 wt% to 70 wt%, with respect to the total weight of the Li₂S-containing composite. With the composite having a Li₂S content (e.g., amount) in the aforementioned ranges, a cathode having improved ionic conductivity and durability may be prepared. In the composite of Li₂S and the lithium salt, the content (*e.g.,* amount) of the lithium salt may be 5 wt% to 50 wt%, 10 wt% to 50 wt%, 20 wt% to 50 wt%, or 30 wt% to 50 wt%, with respect to the total weight of the Li₂S-containing composite.

The Mohs hardness of the lithium salt and the carbon-based material may each be greater than that of Li₂S. The Mohs hardness of Li₂S may be, for example, 0.6 or less. The Mohs hardness of the lithium salt may be 0.7 or more, 0.8 or more, 0.9 or more, 1.0 or more, 1.5 or more, or 2.0 or more. Because the lithium salt has a Mohs hardness in the aforementioned ranges, Li₂S may be more easily pulverized during the milling process, and a solid solution of Li₂S and the lithium salt may more easily form. The Mohs hardness of LiI may be, for example, 2.0. The Mohs hardness of the carbon-based material may each be 0.7 or more, 0.8 or more, 0.9 or more, 1.0 or more, 1.2 or more, or 1.5 or more. Because the carbon-based material has a Mohs hardness in the aforementioned ranges, Li₂S may be more easily pulverized during the milling process, and a solid solution of Li₂S, lithium salt, and carbon-based material may be more easily formed. The Mohs hardness of carbon nanofibers (CNF) may be, for example, 1.5.

The composite of Li₂S and a lithium salt, or the composite of Li₂S, a lithium salt, and carbon-based material may have, for example, an ionic conductivity at 25 °C of 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more. Ionic conductivity may be measured, for example, utilizing electrochemical impedance spectroscopy, a DC polarization method, and/or the like. Because the composite of Li₂S and a lithium salt has an ionic conductivity within the aforementioned ranges, the internal resistance of a cathode including the composite of Li₂S and the lithium salt may further decrease. The cycling performance of an all-solid secondary battery including the cathode may improve.

### Cathode

The cathode according to one or more embodiments may include a cathode current collector; and a cathode active material layer positioned on the cathode current collector and containing the composite cathode active material described above.

For example, the cathode active material layer may include a composite cathode active material including a Li₂S-containing composite with a reduced content (*e.g.,* amount) of fine particles (fine powder) and having D10 of 5 µm or more. In one or more embodiments, because side reactions due to fine particles are suppressed or reduced, the lifetime characteristics of an all-solid secondary battery that includes the cathode active material layer may improve. Furthermore, as the cathode active material layer improves ionic conductivity and electronic conductivity, the charge-discharge efficiency of an all-solid secondary battery that includes the cathode active material layer may be excellent or suitable.

### Cathode: Cathode Active Material Layer

A cathode according to one or more embodiments may include a cathode current collector and a cathode active material layer arranged on the cathode current collector. The cathode active material layer may include the composite cathode active material above.

According to one or more embodiments, the cathode active material layer may further include a solid electrolyte. For example, the cathode may have further decreased internal resistance due to including the composite cathode active material and the solid electrolyte. Thus, the cycling performance of a secondary battery provided with the cathode may further improve.

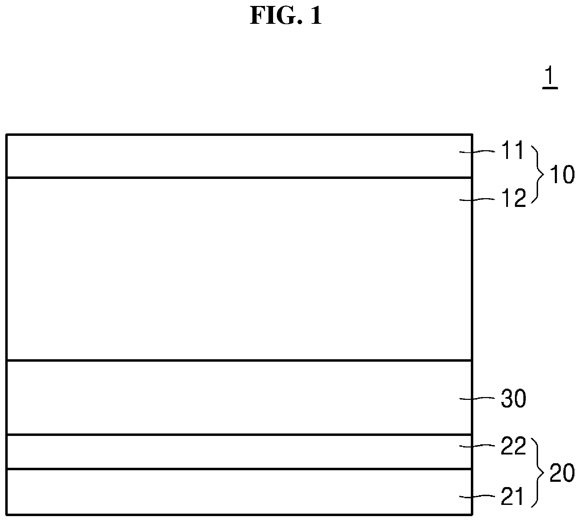

Referring to FIGs. 1 to 5, a cathode 10 may include a cathode current collector 11 and a cathode active material layer 12 arranged on the cathode current collector 11. The cathode active material layer 12 may include the composite cathode active material.

According to one or more embodiments, the content (*e.g.,* amount) of the composite cathode active material may be 40 wt% to 90 wt%, 40 wt% to 80 wt%, 50 wt% to 80 wt%, or 50 wt% to 70 wt%, with respect to the total weight of the cathode active material layer 12. If (*e.g.,* when) the amount of the composite cathode active material excessively (or substantially) decreases, the energy density of the secondary battery may deteriorate. If (*e.g.,* when) the amount of the composite cathode active material excessively (or substantially) increases, degradation of the cathode by volume changes of the cathode during charging and discharging may be accelerated. As a result, the cycling performance of the secondary battery 1 may deteriorate.

The cathode active material layer 12 may further include other suitable composite cathode active materials, in addition to the composite cathode active materials described above.

Other composite cathode active materials may include, for example, a Li₂S-containing composite. The Li₂S composite may include, for example, a composite of Li₂S and a carbon-based material, a composite of Li₂S, a carbon-based material, and a solid electrolyte, a composite of Li₂S and a solid electrolyte, a composite of Li₂S and a lithium salt, a composite of Li₂S and a metal carbide, a composite of Li₂S, a carbon-based material, and a metal carbide, a composite of Li₂S and a metal nitride, a composite of Li₂S, a carbon-based material, and a metal nitride, and/or any suitable combination thereof.

The composite of Li₂S and a carbon-based material may include a carbon-based material. For details of the carbon-based material, refer to the carbon-based material of the composite cathode active material described above. The method of preparing the composite of Li₂S and a carbon-based material may be a dry method, a wet method, and/or any suitable combination thereof; however, the method is not limited thereto and may be any suitable method generally available and/or generally utilized in the art. For example, the method of preparing the composite of Li₂S and a carbon-based material may be milling, heat treatment, deposition, and/or the like; but the method is not necessarily limited thereto and may be any suitable method generally available and/or generally utilized in the art.

The composite of Li₂S, a carbon-based material, and a solid electrolyte may include a carbon-based material and a solid electrolyte. For details of the carbon-based material, refer to the composite of Li₂S and a carbon-based material, described above. The solid electrolyte may be, for example, any suitable material generally available and/or generally utilized as ionically conductive material in the art. The solid electrolyte may be, for example, an inorganic solid electrolyte. The solid electrolyte may be, for example, a crystalline solid electrolyte, an amorphous solid electrolyte, and/or any suitable combination thereof. The solid electrolyte may be, for example, a sulfide-based solid electrolyte, an oxide-based solid electrolyte, and/or any suitable combination thereof. The sulfide-based solid electrolyte may contain, for example, Li, S, and P, and may optionally further contain a halogen element. The sulfide-based solid electrolyte may be (*e.g.,* may be selected from among) sulfide-based solid electrolytes utilized in a solid electrolyte layer. The sulfide-based solid electrolyte may have an ionic conductivity of 1×10⁻⁵ S/cm or more at room temperature, for example. The oxide-based solid electrolyte may contain, for example, Li, O, and a transition metal element, and may optionally further contain other elements. For example, the oxide-based solid electrolyte may be a solid electrolyte having an ionic conductivity of 1×10⁻⁵ S/cm or more at room temperature. The oxide-based solid electrolyte may be (*e.g.,* may be selected from among) oxide-based solid electrolytes utilized in a solid electrolyte layer.

The composite of Li₂S and solid electrolyte may include a solid electrolyte. For details of the solid electrolyte, refer to the composite of Li₂S, a carbon-based material, and a solid electrolyte described above.

The composite of Li₂S and a lithium salt may include Li₂S and a lithium salt. For details of the lithium salt, refer to the lithium salt of the composite cathode active material described above. In one or more embodiments, the lithium salt may be at least one lithium halide compound of (*e.g.,* selected from among) LiF, LiCl, LiBr, and/or Lil. For example, the composite of Li₂S and a lithium salt may be a composite of Li₂S and a lithium halide. Because the composite of Li₂S and a lithium halide includes a lithium halide compound, further improved ionic conductivity may be provided. The composite of Li₂S and a lithium salt may be distinct from a simple mixture of Li₂S and a lithium salt. Because the simple mixture of Li₂S and a lithium salt fails to maintain dense interfaces between Li₂S and the lithium salt, the simple mixture of Li₂S and a lithium salt may provide relatively high interfacial resistance and may cause deterioration of the lifespan characteristics of an all-solid secondary battery.

The composite of Li₂S and metal carbide may include a metal carbide. The metal carbide may be, for example, a two-dimensional metal carbide. The two-dimensional metal carbide may be represented by, for example, Mₙ₊₁CₙTₓ (M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, and/or any suitable combination thereof. The surface of the two-dimensional metal carbide may be terminated by O, OH, and/or F.

The composite of Li₂S, a carbon-based material, and a metal carbide may include a carbon-based material and a metal carbide. For details of the carbon-based material, refer to the composite of Li₂S and a carbon-based material, described above. For details of the metal carbide, refer to the composite of Li₂S and a metal carbide described above.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (M is a transition metal, T is a terminal group, T is O, OH and/or F, n = 1, 2, or 3, and x is the number of terminal groups). The surface of the two-dimensional metal nitride may be terminated by O, OH, and/or F.

The composite of Li₂S, a carbon-based material, and a metal nitride may include a carbon-based material and a metal nitride. For details of the carbon-based material, refer to the composite of Li₂S and a carbon-based material, described above. For details of the metal nitride, refer to the composite of Li₂S and a metal nitride described above.

The cathode active material layer 12 may further include, for example, a sulfide-based compound distinct from the composite cathode active materials described above. The sulfide-based compound may be, for example, a compound including sulfur and a metal element other than Li. The sulfide-based compound may be, for example, a compound including sulfur and a metal element with an atomic weight of 10 or more, that belongs to Groups 1 to 14 in the Periodic Table of the Elements. The sulfide-based compound may be, for example, FeS₂, VS₂, NaS, MnS, FeS, NiS, CuS, and/or any suitable combination thereof. As the cathode active material layer further includes a sulfide-based compound, the cycling performance of an all-solid secondary battery may further improve. The amount of such a sulfide-based compound included in the cathode active material layer 12 may be 10 wt% or less, 5 wt% or less, 3 wt% or less, or 1 wt% or less, with respect to the total weight of the cathode active material layer 12.

### Cathode: Solid Electrolyte

The cathode active material layer 12 may further include, for example, a solid electrolyte. The solid electrolyte may be a sulfide-based solid electrolyte, for example. The solid electrolyte included in the cathode 10 may be substantially identical to or different from a solid electrolyte included in the solid electrolyte layer 30. For details of the solid electrolyte, refer to the description of the solid electrolyte provided above.

The solid electrolyte included in the cathode active material layer 12 may have a smaller median particle diameter D50 than that of the solid electrolyte included in the solid electrolyte layer 30. For example, the median particle diameter D50 of the solid electrolyte included in the cathode active material layer 12 may be 90 % or less, 80 % or less, 70 % or less, 60 % or less, 50 % or less, 40 % or less, 30 % or less, or 20 % or less, with respect to the median particle diameter D50 of the solid electrolyte included in the solid electrolyte layer 30. D50 average particle diameter may be, for example, a median particle diameter (D50). Median particle diameter (D50) may refer to a particle size corresponding to a cumulative volume of 50 vol% as counted from the smallest particle size in a particle size distribution measured by a laser diffraction method.

With respect to 100 parts by weight of the cathode active material layer 12, the solid electrolyte may be included in an amount of 10 parts by weight to 60 parts by weight, 10 parts by weight to 50 parts by weight, 20 parts by weight to 50 parts by weight, or 30 parts by weight to 50 parts by weight. If (*e.g.,* when) the content (*e.g.,* amount) of the solid electrolyte excessively (or substantially) decreases, the internal resistance of the cathode may increase, causing the cycling performance of the secondary battery to deteriorate. If (*e.g.,* when) the amount of the sulfide-based solid electrolyte excessively (or substantially) increases, the energy density of the secondary battery 1 may decrease.

### Cathode: Conductive Material

The cathode active material layer 12 may further include a conductive material. The conductive material may be, for example, a carbon-based conductive material, a metal-based conductive material, and/or any suitable combination thereof. Examples of the carbon-based conductive material may include graphite, carbon black, acetylene black, Ketjen black, carbon fibers, and/or any suitable combination thereof. However, the carbon-based conductive material is not limited to the aforementioned examples and may be any suitable material generally available and/or generally utilized as a carbon-based conductive material in the art. The metal-based conductive material may be metal powder, metal fibers, and/or any suitable combination thereof, but without being limited thereto, and may any suitable metal-based conductive material generally available and/or generally utilized in the art. For example, the content (*e.g.,* amount) of the conductive material included in the cathode active material layer 12 may be 1 wt% to 30 wt%, 1 wt% to 20 wt%, 1 wt% to 10 wt%, with respect to a total weight of the cathode active material layer 12.

The cathode active material layer may include a carbon-based material and the carbon-based material may be arranged only in the composite cathode active material. The cathode active material layer 12 may not contain any additional carbon-based materials, other than the composite cathode active material provided with the carbon-based material. Because the cathode active material layer does not contain any additional carbon-based materials, the cathode and the secondary battery 1 may have improved energy density, and the manufacturing process thereof may be simplified.

### Cathode: Binder

The cathode active material layer 12 may further include a binder. The binder may be, for example, styrene butadiene rubber (SBR), polytetrafluoroethylene, polyvinylidene fluoride, polyethylene, and/or the like, but without being limited to the aforementioned examples, may utilize any suitable material generally available and/or generally utilized as a binder in the art. The content (*e.g.,* amount) of the binder included in the cathode active material layer 12 may be, for example, 1 wt% to 10 wt% with respect to a total weight of the cathode active material layer 12. In one or more embodiments, the binder may not be provided.

### Cathode: Other Additives

The cathode active material layer 12 may further include, for example, an additive such as a filler, a coating agent, a dispersing agent, and an ionically conductive aid, in addition to the composite cathode active material, the solid electrolyte, the binder, and the conductive material described above.

For the filler, coating agent, dispersing agent, and ionically conductive aid that may be included in the cathode active material layer 12, any suitable material generally available and/or generally utilized in an electrode of an all-solid secondary battery may be utilized.

### Cathode: Cathode Current Collector

For example, the cathode current collector 11 may utilize a plate, a foil, and/or the like, formed of (including) indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof. In one or more embodiments, the cathode current collector 11 may not be provided. The cathode current collector 11 may have a thickness of, for example, 1 µm to 100 µm, 1 µm to 50 µm, 5 µm to 25 µm, or 10 µm to 20 µm.

For example, the cathode current collector 11 may include a base film, and a metal layer arranged on one side or both sides (*e.g.,* opposite sides) of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), and/or any suitable combination thereof. For example, the base film may be an insulator. As the base film includes an insulating thermoplastic polymer, in the event of a short circuit, the base film is softened or liquefied, blocking the operation of the battery, to thereby prevent or reduce a rapid increase in electrical current. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), and/or an alloy thereof. In the event of an overcurrent, the metal layer may be disconnected, thus acting as an electrochemical fuse to provide protection against short circuits. A limiting current and a maximum current may be controlled or selected through controlling a thickness of the metal layer. The metal layer may be plated or deposited on the base film. As the thickness of the metal layer decreases, the limiting current and/or maximum current of the cathode current collector 11 decrease, and therefore, the stability of the lithium battery during a short circuit may improve.

A lead-tab may be added on the metal layer for connection to the outside. The lead-tab may be welded to the metal layer or a metal layer/base film laminate by ultrasonic welding, laser welding, spot welding, and/or the like. As the base film and/or the metal layer melt during welding, the metal layer may be electrically connected to the lead-tab. For stronger welding between the metal layer and the lead-tab, a metal chip may be added between the metal layer and the lead-tab. The metal chip may be a flake of substantially the same material as the metal of the metal layer. For example, the metal chip may be a metal foil, a metal mesh, and/or the like. For example, the metal chip may be an aluminum foil, a copper foil, an SUS foil, and/or the like. By welding the metal layer with the lead-tab after placing the metal chip on the metal layer, the lead-tab may be welded to a metal chip/metal layer laminate or a metal chip/metal layer/base film laminate. As the base film, the metal layer, and/or the metal chip melt during welding, the metal layer or the metal layer/metal chip laminate may be electrically connected to the lead-tab. A metal chip and/or a lead-tab may be further added on a part of the metal layer. For example, the base film may have a thickness of 1 µm to 50 µm, 1.5 µm to 50 µm, 1.5 µm to 40 µm, or 1 µm to 30 µm. With the base film having a thickness within the aforementioned ranges, the weight of the electrode assembly may be more effectively reduced. For example, the base film may have a melting point of 100 °C to 300 °C, 100 °C to 250 °C or less, or 100 °C to 200 °C. If (e.g., when) the base film has a melting point within the aforementioned ranges, the base film may easily melt and be bonded to the lead-tab while welding the lead-tab. To improve adhesion between the base film and the metal layer, a surface treatment such as corona treatment may be performed on the base film. For example, the metal layer may have a thickness of 0.01 µm to 3 µm, 0.1 µm to 3 µm, 0.1 µm to 2 µm, or 0.1 µm to 1 µm. With the metal layer having a thickness within the aforementioned ranges, the electrode assembly may provide stability while maintaining conductivity. For example, the metal chip may have a thickness of 2 µm to 10 µm, 2 µm to 7 µm, or 4 µm to 6 µm. With the metal chip having a thickness within the aforementioned ranges, the metal layer and the lead-tab may be more easily connected. If (e*.g.,* when) the cathode current collector 11 has the above structure, the weight of the cathode may be reduced, and as a result, energy density of the cathode and the lithium battery may improve.

### Cathode: Inactive Member

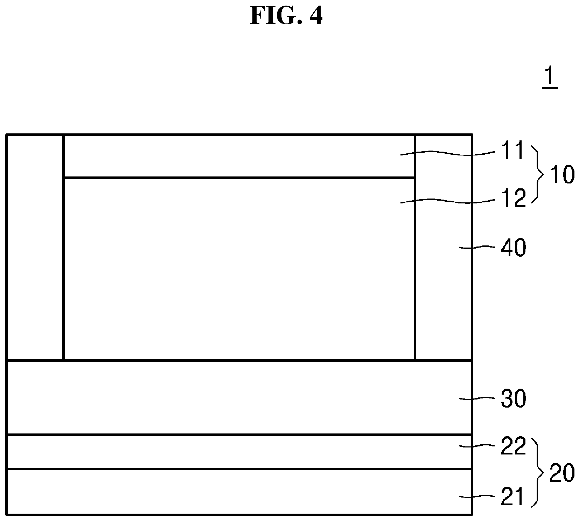

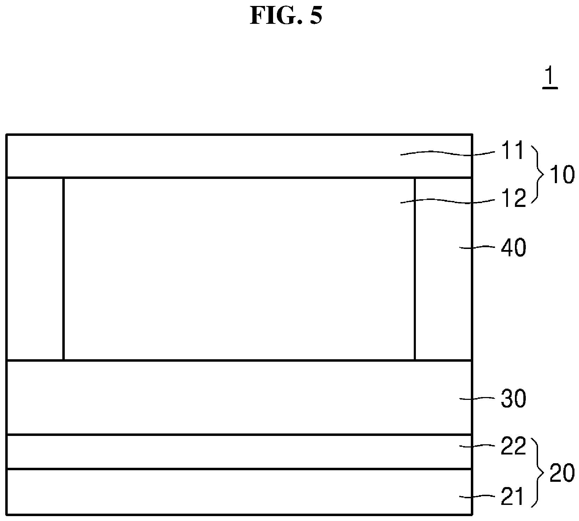

Referring to FIGs. 4 and 5, a cathode 10 may include a cathode current collector 11 and a cathode active material layer 12 arranged on the cathode current collector 11. An inactive member 40 may be arranged on one side surface of the cathode 10. Referring to FIG. 4, the inactive member 40 may be arranged on one side surface of the cathode current collector 11 and the cathode active material layer 12. Referring to FIG. 5, the inactive member 40 may be arranged on one side surface of the cathode active material layer 12 and arranged between the solid electrolyte layer 30 and the cathode current collector 11 opposing the solid electrolyte layer 30. The inactive member 40 may not be arranged on one side surface of the cathode current collector 11.

Because inclusion of the inactive member 40 prevents crack formation in the solid electrolyte layer 30 at the time of manufacturing and/or during charging and discharging of an all-solid secondary battery 1, the cycling performance of the all-solid secondary battery 1 may improve as a result. In an all-solid secondary battery 1 that does not include the inactive member 40, as a non-uniform (substantially non-uniform) pressure is applied to the solid electrolyte layer 30 that is in contact with the cathode 10 during manufacturing and/or charging and discharging of the all-solid secondary battery 1, cracks may form in the solid electrolyte layer 30, and due to the subsequent growth of lithium metal, the likelihood of a short circuit occurring may increase.

In the all-solid secondary battery 1, the thickness of the inactive member 40 may be greater than the thickness of the cathode active material layer 12, or equal to the thickness of the cathode active material layer 12. In one or more embodiments, in the all-solid secondary battery 1, the thickness of the inactive member 40 may be substantially the same as the thickness of the cathode 10. Because the thickness of the inactive member 40 is equal to the thickness of the cathode 10, a substantially uniform pressure may be applied between the cathode 10 and the solid electrolyte layer 30, and as the cathode 10 and the solid electrolyte layer 30 may be sufficiently flush against each other, interfacial resistances between the cathode 10 and the solid electrolyte layer 30 may decrease. Further, as the solid electrolyte layer 30 is sufficiently sintered during the press manufacturing process of the all-solid secondary battery 1, the solid electrolyte layer 30 and the all-solid secondary battery 1 including the same may have decreased internal resistance.

The inactive member 40, while around (*e.g.,* surrounding) a side surface of the cathode 10, may be in contact with the solid electrolyte layer 30. Because the inactive member 40 is in contact with the solid electrolyte layer 30, while around (*e.g.,* surrounding) a side surface of the cathode 10, crack formation in the solid electrolyte layer 30 that is not in contact with the cathode 20, which may be caused by a pressure difference during a press process, may be effectively suppressed or reduced. The inactive member 40 may surround a side surface of the cathode 10, while being apart from the anode 20, for example, from the first anode active material layer 22. An inactive member 40, while around *(e.g.,* surrounding) a side surface of the cathode 10, may be in contact with an solid electrolyte layer 30 and may be apart from an anode 20. In one or more embodiments, the likelihood of a short circuit occurring due to the cathode 10 and a first anode active material layer 22 coming into physical contact with each other, and/or the likelihood of a short circuit occurring due to overcharging of lithium and/or the like may then be suppressed or reduced. For example, because the inactive member 40 is concurrently (*e.g.,* simultaneously) arranged on one side surface of the cathode active material layer 12 and one side surface of the cathode current collector 11, the risk of short circuiting due to the cathode current collector 11 and the anode 20 coming into contact may be effectively inhibited or reduced.

Referring to FIGs. 4 and 5, the inactive member 40 may extend from one side surface of a cathode 10 to an end portion of the solid electrolyte layer 30. Because the inactive member 40 extends to an end portion of the solid electrolyte layer 30, crack formation in the end portion of the solid electrolyte layer 30 may be suppressed or reduced. The end portion of the solid electrolyte layer 30 may be an outermost part that is in contact with a side surface of the solid electrolyte layer 30. The inactive member 40 may extend to an outermost portion that is in contact with a side surface of the solid electrolyte layer 30. The inactive member 40 may be apart from the anode 20, for example, from the first anode active material layer 22. The inactive member 40 may extend to an end portion of the solid electrolyte layer 30, but may not come in contact with the anode 20. The inactive member 40 may, for example, fill a space that extends from one side surface of the cathode 30 to an end portion of the solid electrolyte layer 30.

Referring to FIGs. 4 and 5, a width of the inactive member 40 extending from one side surface of the cathode 10 to an end portion of the solid electrolyte layer 30 may be, for example, 1 % to 30 %, 1 % to 25 %, 1 % to 20 %, 1 % to 20 %, 1 % to 15 %, 1 % to 10 %, or 1 % to 5 %, with respect to a width between one side surface of the cathode 10 and the other side surface opposite to the one side surface. If (*e.g.,* when) the width of the inactive member 40 is excessively (or relatively) large, the energy density of the all-solid secondary battery 1 may decrease. If (*e.g.,* when) the width of the inactive member 40 is too small, the effect of placing the inactive member 40 may be negligible.

The surface area of the cathode 10 may be smaller than the surface area of the solid electrolyte layer 30 that is in contact with the cathode 10. The inactive member 40, by being arranged to surround the side surface of the cathode 10, compensates for the difference in surface area between the cathode 10 and the solid electrolyte layer 30. Because the surface area of the inactive member 40 compensates for the difference between the surface area of the cathode 10 and the surface area of the solid electrolyte layer 30, crack formation in the solid electrolyte layer 30 caused by a pressure difference during a pressing process may be effectively suppressed or reduced. For example, the sum of the surface area of the cathode 10 and the surface area of the inactive member 40 may be equal to the surface area of the solid electrolyte layer 30.

For example, the surface area of the cathode 10 may be less than 100 %, less than 99 %, less than 98 %, less than 97 %, less than 96 %, or less than 95 %, with respect to the surface area of the solid electrolyte layer 30. For example, the surface area of the cathode 10 may be 50 % to less than 100 %, 50 % to 99 %, 55 % to 98 %, 60 % to 97 %, 70 % to 96 %, 80 % to 95 %, or 85 % to 95 %, with respect to the surface area of the solid electrolyte layer 30.

If (*e.g.,* when) the surface area of the cathode 10 is equal to or larger than the surface area of the solid electrolyte layer 30, the likelihood of a short circuit occurring due to the cathode 10 and the first anode active material layer 22 coming into physical contact with each other, or a short circuit occurring due to overcharging of lithium and/or the like may increase. For example, the surface area of the cathode 10 may be equal to the surface area of the cathode active material layer 12. For example, the surface area of the cathode 10 may be equal to the surface area of the cathode current collector 11.

For example, a surface area of the inactive member 40 may be 50 % or less, 40 % or less, 30 % or less, 20 % or less, or 10 % or less, with respect to a surface area of the cathode 10. For example, the surface area of the inactive member 40 may be 1 % to 50 %, 5 % to 40 %, 5 % to 30 %, 5 % to 20 %, or 5 % to 15 %, with respect to the surface area of the cathode 10.

The surface area S1 of the cathode 10 is smaller than the surface area S4 of the anode current collector 21. For example, the surface area S1 of the cathode 10 may be less than 100 %, less than 99 %, less than 98 %, less than 97 %, less than 96 %, or less than 95 %, with respect to the surface area S4 of the anode current collector 21. For example, the surface area S1 of the cathode 10 may be less than 50 % to 100 %, 50 % to 99 %, 55 % to 98 %, 60 % to 97 %, 70 % to 96 %, 80 % to 95 %, or 85 % to 95 %, with respect to the surface area S4 of the anode current collector 21. For example, the surface area S4 of the anode current collector 21 may be equal to the surface area of the anode 20. For example, the surface area S4 of the anode current collector 21 may be equal to the surface area of the first anode active material layer 22.

As used herein, "identical" and/or "same" area, length, width, thickness, and/or shape or form, unless otherwise indicated that the area, length, width, thickness, and/or shape or form are deliberately varied to differ from each other, may include "substantially identical" and "substantially the same" area, length, width, thickness, and/or shape or form. For example, the "identical" and/or "same" area, length, width, thickness, and/or shape or form may include instances where an unintended difference in the area, length, width, thickness, and/or shape or form is within a range of less than 3 %, less than 2 %, less than 1 %, less than 0.5 %, or less than 0.1 %.

A thickness of the inactive member 40 may be, for example, more than a thickness of the first anode active material layer 22. For example, a thickness of the first anode active material layer 22 may be 50 % or less, 40 % or less, 30 % or less, 20 % or less, or 10 % or less, with respect to a thickness of the inactive member 40. A thickness of the first anode active material layer 22 may be, for example, 1 % to 50 %, 1 % to 40 %, 1 % to 30 %, 1 % to 20 %, or 1 % to 10 %, with respect to a thickness of the inactive member 40.

The inactive member 40 may be a gasket. If (*e.g.,* when) a gasket is utilized as the inactive member 40, the crack formation in the solid electrolyte layer 30 that may occur due to a pressure difference during a press process may be effectively suppressed or reduced.

The inactive member 40 may have, for example, a monolayer structure. In one or more embodiments, the inactive member 40 may have a multilayer structure. In the inactive member 40 having a multilayer structure, each layer may have a different composition. The inactive member 40 having a multilayer structure may have, for example, a two-layer structure, a three-layer structure, a four-layer structure, or a five-layer structure. The inactive member 40 having a multilayer structure may include, for example, one or more adhesive layers and one or more support layers. For example, the adhesive layers may effectively prevent or reduce separation between the cathode 10 and the solid electrolyte layer 30 that may occur due to volume changes of the cathode 10 during charging and discharging of an all-solid secondary battery 1 and may improve a film strength of the inactive member 40 by providing adhesion between the support layer and other layers. The support layer may provide support to the inactive member 40, prevent or reduce non-uniformity of the pressure exerted on the solid electrolyte layer 30 during the press process or charging and discharging processes, and prevent or reduce deformations in the shape of the all-solid secondary battery 1 being produced.

The inactive member 40 may be, for example, a flame-retardant inactive member. Flame retardancy provided by the flame-retardant inactive member may reduce the risk of thermal runaway and explosion of the all-solid secondary battery 1. Consequently, the safety of the all-solid secondary battery 1 may further improve. Because the flame-retardant inactive member absorbs residual moisture inside the all-solid secondary battery 1, degradation of the all-solid secondary battery 1 may be prevented or reduced, which leads to improvement of the lifetime characteristics of the all-solid secondary battery 1.

The flame-retardant inactive member may include, for example, a matrix and a filler. For example, the matrix may include a substrate and a reinforcing material. For example, the matrix may include a fibrous substrate and a fibrous reinforcing material. If (*e.g.,* when) the matrix includes a substrate, the matrix may have elasticity. The matrix may be placed at one or more suitable locations and effectively accommodate volume changes of the all-solid secondary battery 1 during charging and discharging. The substrate included in the matrix may include, for example, a first fibrous material. As the substrate includes the first fibrous material, volume changes of the cathode 10 during charging and discharging of the all-solid secondary battery 1 may be effectively accommodated, and deformations of the inactive member 40 that may be caused by volume changes of the cathode 10 may be effectively suppressed or reduced. For example, the first fibrous material may be a material having an aspect ratio (*e.g.,* a ratio of length to width in an image of the material) of 5 or more, 20 or more, or 50 or more. For example, the first fibrous material may be a material having an aspect ratio of 5 to 1,000, 20 to 1,000, or 50 to 1,000. The first fibrous material may be, for example, an insulating material. Because the first fibrous material is an insulating material, a short circuit that may occur between the cathode 10 and the anode 20 due to lithium dendrites and/or the like during charging and discharging of the all-solid secondary battery 1 may be effectively prevented or reduced. The first fibrous material may include, for example, one or more of (*e.g.,* one or more selected from among) pulp fibers, insulating polymer fibers, and/or ionically conductive polymer fibers. If (*e.g.,* when) the matrix includes the reinforcing material, strength of the matrix may improve. The matrix may serve to prevent or reduce the likelihood of the all-solid secondary battery 1 undergoing an excessive volume change during charging and discharging, and protect the all-solid secondary battery 1 from deformations. The reinforcing material included in the matrix may include, for example, a second fibrous material. As the reinforcing material includes the second fibrous material, a more uniform (*e.g.,* substantially more uniform) increase of the strength of the matrix may be achieved. For example, the second fibrous material may be a material having an aspect ratio of 3 or more, 5 or more, or 10 or more. For example, the first fibrous material may be a material having an aspect ratio of 3 to 100, 5 to 100, or 10 to 100. The second fibrous material may be, for example, a flame-retardant material. Because the second fibrous material is a flame-retardant material, a fire that may be caused by an external impact or by thermal runaway during charging and discharging of the all-solid secondary battery 1 may be effectively suppressed or reduced. The second fibrous material may be, for example, glass fibers, metal oxide fibers, ceramic fibers, and/or the like.

The flame-retardant inactive member may include a filler in addition to the matrix. The filler may be arranged inside the matrix, may be arranged on a surface of the matrix, or may be arranged both inside and on a surface of the matrix. Examples of the filler may include an inorganic material. The filler included in the flame-retardant inactive member may be for example, a moisture getter. For example, by adsorbing to moisture at a temperature of less than 100 °C, the filler may remove residual moisture from the all-solid secondary battery 1, thereby preventing or reducing degradations of the all-solid secondary battery 1. Further, if (*e.g.,* when) the temperature of the all-solid secondary battery 1 increases to 150 °C or higher during charging and discharging of the all-solid secondary battery 1, or due to thermal runaway caused by an external impact, the filler may release the adsorbed moisture, thereby effectively preventing or reducing the all-solid secondary battery 1 from catching fire. For example, the filer may be a flame retardant. For example, the filler may be a metal hydroxide having hygroscopicity. The metal hydroxide included in the filler may be, for example, Mg(OH)₂, Fe(OH)₃, Sb(OH)₃, Sn(OH)₄, Tl(OH)₃, Zr(OH)₄, Al(OH)₃, and/or any suitable combination thereof. The amount of the filler included in the flame-retardant inactive member may be, for example, 10 parts by weight to 80 parts by weight, 20 parts by weight to 80 parts by weight, 30 parts by weight to 80 parts by weight, 40 parts by weight to 80 parts by weight, 50 parts by weight to 80 parts by weight, 60 parts by weight to 80 parts by weight, or 65 parts by weight to 80 parts by weight, with respect to 100 parts by weight of the flame-retardant inactive member 40.

The flame-retardant inactive member may include a binder, for example. The binder may include, for example, a curable polymer or a non-curable polymer. The curable polymer may be a polymer that cures by heat and/or pressure. For example, the curable polymer may be solid at room temperature. Examples of the flame-retardant inactive member 40 may include a heat-press curable film and/or a cured product thereof. The thermal-press curable polymer of the heat-press curable film may be TSA-66 by Toray, for example.

To the substrate, the reinforcing material, the filler, and the binder described above, the flame-retardant inactive member may further include other materials. For example, the flame-retardant inactive member may further include at least one of (*e.g.,* at least one selected from) among paper, an insulating polymer, an ionically conductive polymer, an insulating inorganic material, an oxide-based solid electrolyte, and/or a sulfide-based solid electrolyte. The insulating polymer may be an olefin-based polymer such as polypropylene (PP), polyethylene (PE), and/or the like.

The density of the substrate or the reinforcing material included in the flame-retardant inactive member may be, for example, 10 % to 300 %, 10 % to 150 %, 10 % to 140 %, 10 % to 130 %, or 10 % to 120 %, with respect to the density of the composite cathode active material included in the cathode active material layer 12.

The inactive member 40 may be a member not containing any material with electrochemical activity, *i.e.,* an electrode active material. The electrode active material may be a material that absorbs/desorbs lithium. The inactive member 40 may be a member composed of a material other than electrode active materials that are utilized in the art.

### All-Solid Secondary Battery

An all-solid secondary battery according to one or more embodiments may include the cathode; an anode, and a solid electrolyte layer arranged between the cathode and the anode. The anode layer may include an anode current collector and a first anode active material layer arranged on one side of the anode current collector.

Referring to FIGs. 1 to 5, an all-solid secondary battery 1 may include a cathode 10; an anode 20; and a solid electrolyte layer 30 arranged between the cathode 10 and the anode 20. The anode 20 may include an anode current collector 21 and a first anode active material layer 22 arranged on one side of the anode current collector.

### Cathode

For details of the cathode, refer to the cathode described above.

### Anode

### Anode: Anode Active Material

Referring to FIGs. 1 to 5, the anode 20 may include a first anode active material layer 22. The first anode active material layer 22 may include, for example, an anode active material and a binder.

The anode active material included in the first anode active material layer 22 may be, for example, an anode material capable of providing an alloy or a compound with lithium.

The anode active material included in the first anode active material layer 22 may have, for example, a particulate form (in the form of particles). The anode active material having a particulate form may have an average particle diameter of, for example, 4 µm or less, 3 µm or less, 2 µm or less, 1 µm or less, 500 nm or less, 300 nm or less, or 100 nm or less. The anode active material having a particulate form may have an average particle diameter of, for example, 10 nm to 4 µm, 10 nm to 3 µm, 10 nm to 2 µm, 10 nm to 1 µm, 10 nm to 500 nm, 10 nm to 300 nm, or 10 nm to 100 nm. If (*e.g.,* when) the anode active material has an average particle diameter within the aforementioned ranges, reversible absorption and/or desorption of lithium during charging and discharging may be further facilitated. The average particle diameter of the anode active material may be, for example, a median particle diameter (D50) as measured by a laser-type or kind particle size distribution analyzer.

The anode active material included in the first anode active material layer 22 may include, for example, at least one of (*e.g.,* at least one selected from among) a carbon-based anode active material and/or a metal or metalloid anode active material.

The carbon-based anode active material may include, for example, amorphous carbon, crystalline carbon, porous carbon, and/or any suitable combination thereof.

The carbon-based anode active material may be, for example, an amorphous carbon. Examples of the amorphous carbon may include carbon black (CB), acetylene black (AB), furnace black (FB), Ketjen black (KB), graphene, and/or the like; however, the carbon-based anode active material is not necessarily limited to the aforementioned examples and may be any suitable material categorized as amorphous carbon in the art. Amorphous carbon is carbon with no crystalline structure or an extremely relatively low degree of crystallinity and as such, may be distinct from crystalline carbon or graphitic carbon.

The carbon-based anode active material may be porous carbon, for example. For example, pores included in the porous carbon may have a pore volume of 0.1 cc/g to 10.0 cc/g, 0.5 cc/g to 5 cc/g, or 0.1 cc/g to 1 cc/g. For example, pores included in the porous carbon may have an average pore diameter of 1 nm to 50 nm, 1 nm to 30 nm, or 1 nm to 10 nm. The Brunauer-Emmett-Teller (BET) specific surface of the porous carbon may be, for example, 100 m²/g to 3,000 m²/g.

The metal or metalloid anode active material may include at least one of (*e.g.,* at least one selected from among) gold (Au), platinum (Pt), palladium (Pd), silicon (Si), silver (Ag), aluminum (Al), bismuth (Bi), tin (Sn), and/or zinc (Zn), but without being necessarily limited to the aforementioned materials, may utilize any suitable metal anode active material or metalloid anode active material generally available and/or generally utilized in the art that can form an alloy or a compound with lithium. For example, nickel (Ni) does not form an alloy with lithium and is therefore not regarded as a metal anode active material.

Among these anode active materials, the first anode active material layer 22 may include a single anode active material, or may include a mixture of anode active materials of multiple different types (kinds). For example, the first anode active material layer 22 may include amorphous carbon alone, or may include one or more of (*e.g.,* one or more selected from among) gold (Au), platinum (Pt), palladium (Pd), silicon (Si), silver (Ag), aluminum (Al), bismuth (Bi), tin (Sn), and/or zinc (Zn). In one or more embodiments, the first anode active material layer 22 may include a mixture of amorphous carbon with one or more of (*e.g.,* one or more selected from among) gold (Au), platinum (Pt), palladium (Pd), silicon (Si), silver (Ag), aluminum (Al), bismuth (Bi), tin (Sn), and/or zinc (Zn). A mixing ratio of amorphous carbon to the metal(s) described herein, such as gold (Au), in such a mixture, may be 99:1 to 1:99, 10:1 to 1:2, 5:1 to 1:1, or 4:1 to 2:1 in weight ratio, but without being necessarily limited thereto, the mixing ratio may be selected according to a desired or required feature of the all-solid secondary battery 1. If (*e.g.,* when) the anode active material has the above composition, the cycling performance of the all-solid secondary battery 1 may further improve.

The anode active material included in the first anode active material layer 22 may include, for example, a mixture of first particles composed of amorphous carbon, and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In one or more embodiments, the metalloid may be a semiconductor. The content (*e.g.,* amount) of the second particles may be 1 wt% to 99 wt%, 1 wt% to 60 wt%, 8 wt% to 60 wt%, 10 wt% to 50 wt%, 15 wt% to 40 wt%, or 20 wt% to 30 wt%, with respect to the total weight of the mixture. If (*e.g.,* when) the content (*e.g.,* amount) of the second particles is within the aforementioned ranges, the cycling performance of the all-solid secondary battery 1 may further improve.

In one or more embodiments, the first anode active material layer 22 may include a composite anode active material. The composite anode active material may include, for example, a carbon-based support and a metal-based anode active material supported on the carbon-based support. If (*e.g.,* when) the composite anode active material has the above structure, it may be possible to prevent or reduce uneven distribution of the metal-based anode active material within the first anode active material layer and achieve substantially uniform distribution of the metal-based anode active material. As a result, the cycling performance of the all-solid secondary battery 1 including the first anode active material layer 22 may further improve.

Examples of the metal-based anode active material supported on the carbon-based support may include a metal, a metal oxide, a metal-metal oxide composite, and/or any suitable combination thereof. The metal may include, for example, gold (Au), platinum (Pt), palladium (Pd), silicon (Si), silver (Ag), aluminum (Al), bismuth (Bi), tin (Sn), tellurium (Te), zinc (Zn), and/or the like. The metal oxide may include, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and/or the like. For example, the metal oxide may include AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), and/or any suitable combination thereof. Examples of the metal-metal oxide composite may include a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), and/or any suitable combination thereof.

The carbon-based support may be, for example, an amorphous carbon. The amorphous carbon may be, for example, carbon black (CB), acetylene black (AB), furnace black (FB), Ketjen black (KB), activated carbon, carbon nanofiber (CNF), carbon nanotube (CNT), and/or the like, but without being necessarily limited thereto, any suitable material categorized as amorphous carbon in the art may be utilized. Amorphous carbon is carbon with no crystalline structure or an extremely relatively low degree of crystallinity and as such, may be distinct from crystalline carbon or graphitic carbon. The carbon-based material may be, for example, a carbon-based anode active material.

The composite anode active material may have, for example, a particulate form (in the form of particles). The composite anode active material having a particulate form may have a particle diameter of, for example, 10 nm to 4 µm, 10 nm to 1 µm, 10 nm to 500 nm, 10 nm to 200 nm, or 10 nm to 100 nm. If (*e.g.,* when) the composite anode active material has a particle diameter within the aforementioned ranges, reversible absorption and/or desorption of lithium during charging and discharging may be further facilitated. The metal-based anode active material supported on the support may have, for example, a particulate form. The metal-based anode active material may have a particle diameter of, for example, 1 nm to 200 nm, 1 nm to 150 nm, 5 nm to 100 nm, or 10 nm to 50 nm. The carbon-based support may have, for example, a particulate form. For example, the carbon-based support may have a particle diameter of from 10 nm to 2 µm, 10 nm to 1 µm, 10 nm to 500 nm, 10 nm to 200 nm, or 10 nm to 100 nm. With the carbon-based support having a particle diameter in the aforementioned ranges, a more uniform (*e.g.,* substantially more uniform) distribution within the first anode active material layer may be achieved. For example, the carbon-based support may be nanoparticles (in a nanometer scale) having a particle diameter of 500 nm or less. The particle diameter of the composite anode active material, the particle diameter of the metal-based anode active material, and the particle diameter of the carbon-based support may be, for example, an average particle diameter. The average particle diameter may be, for example, a median particle diameter (D50) as measured by a laser-type or kind particle size distribution analyzer. In one or more embodiments, the average particle diameter may be automatically determined utilizing a software, or manually determined from an electron microscope image.

### Anode: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any suitable material generally available and/or generally utilized as a binder in the art. The binder may be composed of a single type or kind of binder, or multiple binders of different types (kinds).

Because the first anode active material layer 22 includes a binder, the first anode active material layer 22 may be stabilized on the anode current collector 21. Further, crack formation in the first anode active material layer 22 may be suppressed or reduced, despite volume changes and/or displacement of the first anode active material layer 22 during charging and discharging processes. For example, if (*e.g.,* when) the first anode active material layer 22 does not contain any binder, the first anode active material layer 22 may be delaminated (*e.g.,* easily delaminated) from the anode current collector 21. The likelihood of a short circuit occurring may increase due to the anode current collector 21 and the solid electrolyte layer 30 coming in contact with each other at an area where the anode current collector 21 is exposed as a result of delamination of the first anode active material layer 22 from the anode current collector 21. For example, the first anode active material layer 22 may be prepared by applying and drying a slurry having dispersed therein materials forming (or providing) the first anode active material layer 22 on the anode current collector 21. By including a binder in the first anode active material layer 22, stable dispersion of the anode active materials within the slurry may be achieved. For example, if (*e.g.,* when) applying the slurry onto the anode current collector 21 by a screen-printing method, it may be possible to prevent or reduce the screen from clogging (for example, clogging by agglomerates of the anode active material).

### Anode: Other Additives

The first anode active material layer 22 may further include other additives utilized in comparable all-solid secondary batteries of the related art, such as a filler, a coating agent, a dispersing agent, an ionically conductive aid, and/or the like.

### Anode: Solid Electrolyte

The first anode active material layer 22 may further include a solid electrolyte. The solid electrolyte may be, for example, a material of (*e.g.,* selected from among) the solid electrolytes included in the solid electrolyte layer 30. The solid electrolyte included in the first anode active material layer 22 may act as a reaction point where formation of lithium metal starts, may act as a space where the formed lithium metal is stored, or may act as a route for transferring lithium ions in the first anode active material layer 22. In one or more embodiments, the solid electrolyte may not be provided.

In the first anode active material layer 22, the concentration of the solid electrolyte may be, for example, relatively high in a region adjacent to the solid electrolyte layer 30 and relatively low in a region adjacent to the anode current collector 21. For example, the solid electrolyte in the first anode active material layer 22 may have a concentration gradient in which the concentration of the solid electrolyte gradually decreases from a region adjacent to the solid electrolyte layer 30 to a region adjacent to the anode current collector 21.

### Anode: First Anode Active Material Layer

The ratio B/A of initial charge capacity B of the first anode active material layer 22 to initial charge capacity A of the cathode active material layer may be 0.005 to 0.45. The initial charge capacity of the cathode active material layer 12 may be determined at a maximum charging voltage vs. Li/Li⁺ from a first open circuit voltage. The initial charge capacity of the first anode active material layer 22 may be determined at 0.01 V vs. Li/Li⁺ from a second open circuit voltage.

The maximum charging voltage may be determined by the type or kind of the composite cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or a Li₂S composite may be 2.5 V vs. Li/Li⁺. For example, the maximum charging voltage of Li₂S or a Li₂S composite may be 3.0 V vs. Li/Li⁺. The ratio (B/A) of initial charge capacity (B) of the first anode active material layer 22 to initial charge capacity (A) of the cathode active material layer may be, for example, 0.01 to 0.3, 0.01 to 0.2, or 0.05 to 0.1. The initial charge capacity (mAh) of the cathode active material layer 12 may be obtained by multiplying the charge specific capacity (mAh/g) of a composite cathode active material by the mass (g) of the composite cathode active material in the cathode active material layer 12. If (*e.g.,* when) multiple types (kinds) of composite cathode active materials are utilized, the product of charge specific density × mass may be calculated for each composite cathode active material, and the sum of these products may be defined as initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (*e.g.,* when) multiple types (kinds) of anode active materials are utilized, the product of charge specific density × mass may be calculated for each anode active material, and the sum of these products may be defined as initial charge capacity of the first anode active material layer 22. The charge specific density of each of the composite cathode active material and the anode active material may be measured utilizing an all-solid half-cell that uses lithium metal as counter electrode. The initial charge capacity of each of the cathode active material layer 12 and the first anode active material layer 22 may be directly measured by utilizing an all-solid half-cell at a constant current density, for example, at 0.1 mA/cm². For the cathode, this measurement may be made for an operating voltage from a 1^{st} open circuit voltage (OCV) to a maximum charge voltage, for example, 3.0 V (vs. Li/Li⁺). For the anode, this measurement may be made for an operating voltage from a 2^{nd} OCV to 0.01 V with respect to the anode, for example, lithium metal. For example, the all-solid half-cell having the cathode active material layer may be charged from the 1^{st} OCV to 3.0 V with a constant current of 0.1 mA/cm², and the all-solid half-cell having the first anode active material layer may be charged from the 2^{nd} OCV to 0.01 V with a constant current of 0.1 mA/cm². For example, the current density during the constant current charging may be 0.2 mA/cm² or 0.5 mA/cm². The all-solid half-cell having the cathode active material layer may be charged from the 1^{st} OCV to, for example, 2.5 V, 2.0 V, 3.5 V, or 4.0 V. The maximum charge voltage of the cathode active material layer may be determined according to the maximum voltage of a cell that satisfies the safety conditions described in JISC8712:2015 by Japanese Standards Association, which is hereby incorporated by reference.

If (*e.g.,* when) the initial charge capacity of the first anode active material layer 22 is excessively (or relatively) small, the thickness of the first anode active material layer 22 becomes extremely small, and as a result, lithium dendrites formed between the first anode active material layer 22 and the anode current collector 21 during repeated charging and discharging processes may cause disintegration of the first anode active material layer 22, making it difficult to achieve improved cycling performance of the all-solid secondary battery 1. If (*e.g.,* when) the charge capacity of the first anode active material layer 22 is excessively (or relatively) large, the energy density of the all-solid secondary battery 1 may decrease, and the internal resistance of the all-solid secondary battery 1 by the first anode active material layer 22 may increase, making it difficult to achieve improved cycling performance of the all-solid secondary battery 1.

For example, a thickness of the first anode active material layer 22 may be 50 % or less, 40 % or less, 30 % or less, 20 % or less, 10 % or less, or 5 % or less, with respect to a thickness of the cathode active material layer 12. For example, a thickness of the first anode active material layer 22 may be 1 % to 50 %, 1 % to 40 %, 1 % to 30 %, 1 % to 20 %, 1 % to 10 %, or 1 % to 5 %, with respect to a thickness of the cathode active material layer 12. The first anode active material layer 22 may have a thickness of, for example, 1 µm to 20 µm, 2 µm to 15 µm, or 3 µm to 10 µm. If (*e.g.,* when) the first anode active material layer 22 is excessively (or relatively) thin, lithium dendrites formed between the first anode active material layer 22 and the anode current collector 21 may cause disintegration of the first anode active material layer 22, making it difficult to achieve improved cycling performance of the all-solid secondary battery 1. If (*e.g.,* when) the thickness of the first anode active material layer 22 excessively (or substantially) increases, the energy density of the all-solid secondary battery 1 may decrease, and the internal resistance of the all-solid secondary battery 1 by the first anode active material layer 22 may increase, thus making it difficult to achieve improved cycling performance of the all-solid secondary battery 1. With decreasing thickness of the first anode active material layer 22, for example, the initial charge capacity of the first anode active material layer 22 may also decrease.

### Anode: Second Anode Active Material Layer

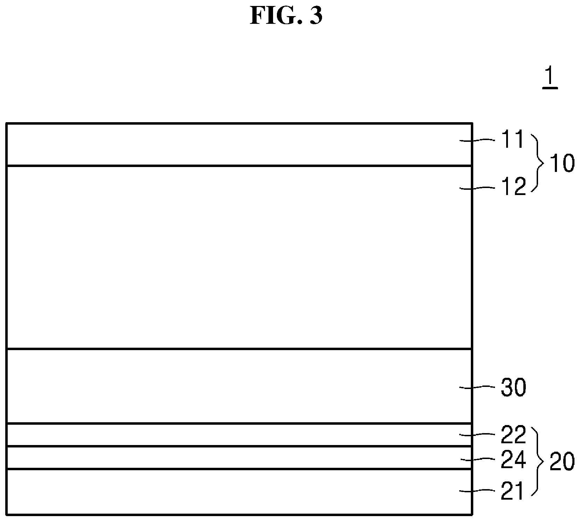

Referring to FIG. 3, the all-solid secondary battery 1 may further include, after charging, for example, a second anode active material layer 24 that is arranged between the anode current collector 21 and the first anode active material layer 22. The second anode active material layer 24 may be a metal layer including lithium or a lithium alloy. In one or more embodiments, the second anode active material layer 24, as it is a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, and may be any suitable material generally available and/or generally utilized as a lithium alloy in the art. The second anode active material layer 24 may be composed of one of such alloys, or lithium, or may be composed of one or more suitable types (kinds) of alloys. The second anode active material layer 24 may be, for example, a plated layer. For example, the second anode active material layer 24 may be plated between the first anode active material layer 22 and the anode current collector 21 during a charging process of the all-solid secondary battery 1.

A thickness of the second anode active material layer 24 is not limited, but may be, for example, 1 µm to 500 µm, 1 µm to 200 µm, 1 µm to 150 µm, 1 µm to 100 µm, or 1 µm to 50 µm. If (*e.g.,* when) the thickness of the second anode active material layer 24 is excessively (or relatively) small, the second anode active material layer 24 may fail to sufficiently function as a lithium reservoir. If (*e.g.,* when) the thickness of the second anode active material layer 24 is excessively (or relatively) large, the mass and volume of the all-solid secondary battery 1 may increase, and the cycling performance of the all-solid secondary battery 1 may be more likely to deteriorate.

In one or more embodiments, in the all-solid secondary battery 1, the second anode active material layer 24 may be, for example, arranged between the anode current collector 21 and the first anode active material layer 22 prior to assembly of the all-solid secondary battery 1. In embodiments in which the second anode active material layer 24 is to be arranged between the anode current collector 21 and the first anode active material layer 22 prior to assembly of the all-solid secondary battery 1, the second anode active material layer 24, as it is a metal layer containing lithium, may act as a lithium reservoir. For example, a lithium foil may be arranged between the anode current collector 21 and the first anode active material layer 22 prior to assembly of the all-solid secondary battery 1.

In a case in which the second anode active material layer 24 is to be plated by charging after assembly of the all-solid secondary battery 1, because the second anode active material layer 24 is not included at the time of assembly of the all-solid secondary battery 1, the all-solid secondary battery 1 may have increased energy density. If (*e.g.,* when) charging the all-solid secondary battery 1, the charging may be performed exceeding the charge capacity of the first anode active material layer 22. The first anode active material layer 22 may then be overcharged. At the beginning of the charging, lithium may be absorbed into the first anode active material layer 22. The anode active material included in the first anode active material layer 22 may form an alloy or a compound with lithium ions moved from the cathode 10. If (*e.g.,* when) the charging is performed exceeding the capacity of the first anode active material layer 22, lithium may be plated, for example, on the back surface of the first anode active material layer 22, for example, between the anode current collector 21 and the first anode active material layer 22, and the plated lithium may then form a metal layer that corresponds to the second anode active material layer 24. The second anode active material layer 24 may be a metal layer mainly composed of lithium (*i.e.,* metal lithium). This result may be attributed to the fact that the anode active material included in the first anode active material layer 22 includes a material that forms an alloy or compound with lithium. During discharge, lithium in metal layers, for example, in the first anode active material layer 22 and the second anode active material layer 24, may be ionized and migrate toward the cathode 10. In one or more embodiments, it is possible to utilize lithium as an anode active material in the all-solid secondary battery 1. In one or more embodiments, the first anode active material layer 22 covers the second anode active material layer 24, and as such, may function as a protective layer for the metal layer, for example, the second anode active material layer 24, while suppressing or reducing precipitation and growth of lithium dendrites. In one or more embodiments, a short circuit and capacity fading in the all-solid secondary battery 1 may be suppressed or reduced, and consequently, the cycling performance of the all-solid secondary battery 1 may improve. In one or more embodiments, in a case in which the second anode active material layer 24 is to be arranged by charging after assembly of the all-solid secondary battery 1, the anode 20, for example, the anode current collector 21, the first anode active material layer 22, and the area therebetween, may be a Li-free region free of Li while the all-solid secondary battery 1 is in the initial state or a fully discharged state.

### Anode: Anode Current Collector

The anode current collector 21 may be formed of a material that does not react with lithium, for example, does not form an alloy or a compound with lithium. The material providing the anode current collector 21 may be, for example, copper (Cu), stainless steel, titanium (Ti), iron (Fe), cobalt (Co), nickel (Ni), and/or the like, but without being necessarily limited thereto, may be any suitable material generally available and/or generally utilized as an electrode current collector in the art. The anode current collector 21 may be formed of one type or kind of the aforementioned metals, an alloy of two or more types (kinds) metals thereof, or a covering material. The anode current collector 21 may be, for example, a plate type or kind or a foil type or kind.

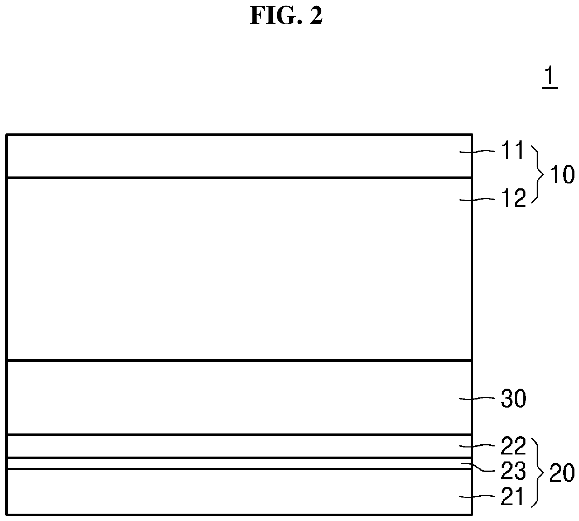

Referring to FIG. 2, the all-solid secondary battery 1 may further include a thin film 23 that contains an element capable of providing an alloy with lithium, on one side of the anode current collector 21. The thin film 23 may be positioned between the anode current collector 21 and the first anode active material layer 22. The thin film 23 may include, for example, an element capable of providing an alloy with lithium. Examples of the element capable of providing an alloy with lithium may include gold, silver, zinc, tin, indium, silicon, aluminum, bismuth, and/or the like, but without being limited thereto, any suitable element generally available and/or generally utilized in the art that is capable of providing an alloy with lithium may be utilized. The thin film 23 may be composed of one of the aforementioned metals or may be composed of an alloy of one or more suitable kinds of metals. If (e.g., when) the thin film 23 is arranged on the anode current collector 21, the form of the second anode active material layer 24 being plated between the thin film 23 and the first anode active material layer 22 may have a further flattened form, and the cycling performance of the all-solid secondary battery 1 may further improve.

For example, the thin film 23 may have a thickness of 1 nm to 800 nm, 10 nm to 700 nm, 50 nm to 600 nm, or 100 nm to 500 nm. If (e.g., when) the thickness of the thin film 23 is less than 1 nm, functions attributable to the thin film 23 may be difficult to achieve. If (e.g., when) the thickness of the thin film 23 is excessively (or relatively) large, the thin film 23 may absorb lithium by itself, causing the amount of lithium being plated at the anode to decrease, and as a result, the all-solid secondary battery 1 may have decreased energy density and deteriorated cycling performance. The thin film 23 may be positioned on the anode current collector 21 by a vacuum deposition method, a sputtering method, a plating method and/or the like, but is not limited to the aforementioned methods and may be any suitable method generally available and/or generally utilized in the art that is capable of forming (or providing) the thin film 23.

In one or more embodiments, the anode current collector 21 may include a base film, and a metal layer arranged on one side or both sides (e.g., opposite sides) of the base film. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), and/or any suitable combination thereof. The polymer may be an insulating polymer. As the base film includes an insulating thermoplastic polymer, in the event of a short circuit, the base film is softened or liquefied, blocking the operation of the battery, to thereby prevent or reduce a rapid increase in electrical current. For example, the metal layer may include copper (Cu), stainless steel, titanium (Ti), iron (Fe), cobalt (Co), nickel (Ni), or an alloy thereof. The anode current collector 21 may further include a metal chip and/or a lead-tab. For detailed descriptions of the base film, the metal layer, the metal chip, and the lead-tab of the anode current collector 21, refer to the cathode current collector 11 described above. If (e.g., when) the anode current collector 21 has the above structure, the weight of the anode may be reduced, and as a result, energy density of the anode and the lithium battery may improve.

### Solid Electrolyte Layer

### Solid Electrolyte Layer: Electrolyte

Referring to FIGs. 1 to 5, the solid electrolyte layer 30 may include an electrolyte arranged between the cathode 10 and the anode 20. For example, the electrolyte may include a solid electrolyte, a gel electrolyte, and/or any suitable combination thereof.

Examples of the solid electrolyte may include a sulfide-based solid electrolyte, an oxide-based solid electrolyte, a polymer solid electrolyte, and/or any suitable combination thereof.

The solid electrolyte may be, for example, a sulfide-based solid electrolyte. The sulfide-based solid electrolyte may be, for example, one or more of (e.g., one or more selected from among) Li₂S-P₂S₅, Li₂S-P₂S₅-LiX wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCI, Li₂S-SiS₂-B₂S₃-LiI, Li₂S-SiS₂-P₂S₅-LiI, Li₂S-B₂S₃, Li₂S-P₂S₅-ZₘSₙ wherein m and n each are a positive number, and Z is Ge, Zn or Ga, Li₂S-GeS₂, Li₂S-SiS₂-Li₃PO₄, Li₂S-SiS₂-LiₚMO_{q} wherein p and q each are a positive number and M is P, Si, Ge, B, Al, Ga or In, Li₇₋ₓPS₆₋ₓClₓ wherein 0≤x≤2, Li₇₋ₓPS₆₋ₓBrₓ wherein 0≤x≤2, and/or Li₇₋ₓPS₆₋ₓIₓ wherein 0≤x≤2. The sulfide-based solid electrolyte may be prepared by treating starting materials, such as Li₂S and P₂S₅, by a method such as melt-quenching, mechanical milling, and/or the like. In one or more embodiments, following such a treatment, heat treatment may be conducted. The sulfide-based solid electrolyte may be amorphous or crystalline, or may be in a mixed state thereof. In one or more embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including Li₂S-P₂S₅. If (e.g., when) a sulfide-based solid electrolyte material utilized to form (or provide) the solid electrolyte contains Li₂S-P₂S₅, the mixing molar ratio of Li₂S : P₂S₅ may be in a range of, for example, 20 : 80 to 90 : 10, 25 : 75 to 90 : 10, 30 : 70 to 70: 30, or 40: 60 to 60: 40.

For example, the sulfide-based solid electrolyte may include an argyrodite-type or kind solid electrolyte represented by Formula 1:

Formula 1 Li⁺₁₂₋ₙ₋ₓAⁿ⁺X²⁻₆₋ₓY⁻ₓ

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or N₃, and 1≤n≤5 and 0≤x≤2 may be satisfied. For example, the sulfide-based solid electrolyte may be an argyrodite-type or kind compound including one or more of (e.g., one or more selected from among) Li₇₋ₓPS₆₋ₓClₓ wherein 0≤x≤2, Li₇₋ₓPS₆₋ₓBrₓ wherein 0≤x≤2, and/or Li₇₋ₓPS₆₋ₓIₓ wherein 0≤x≤2. For example, the sulfide-based solid electrolyte may be an argyrodite-type or kind compound including at least one of (e.g., at least one selected from among) Li₆PS₅Cl, Li₆PS₅Br, and/or Li₆PS₅I.

An argyrodite-type or kind solid electrolyte may have a density of 1.5 g/cc to 2.0 g/cc. If (*e.g*., when) the argyrodite-type or kind solid electrolyte has a density of 1.5 g/cc or more, an internal resistance of an all-solid secondary battery may be reduced, and Li penetration to the solid electrolyte layer may be more effectively suppressed or reduced.

The oxide-based all-solid electrolyte may be, for example, Li_{1+x+y}AlₓTi₂₋ₓSi_{y}P_{3-y}O₁₂ (0<x<2 and 0≤y<3), BaTiO₃, Pb(Zr,Ti)O₃ (PZT), Pb₁₋ₓLaₓZr_{1-y} Ti_{y}O₃ (PLZT) (0≤x<1 and 0≤y<1), Pb(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), and/or any suitable combination thereof. The oxide-based solid electrolyte is produced, for example, by a sintering method and/or the like.

For example, the oxide-based solid electrolyte may be a garnet-type or kind solid electrolyte of (*e.g*., selected from among) Li₇La₃Zr₂O₁₂ (LLZO) and/or Li₃₊ₓLa₃Zr₂₋ₐMₐO₁₂ (M doped LLZO, M=Ga, W, Nb, Ta, or Al, and 0<a<2 and 0≤x≤10).

For example, the polymer solid electrolyte may include a mixture of a lithium salt and a polymer, or may include a polymer having an ion-conducting functional group. For example, the polymer solid electrolyte may be a polymer electrolyte that is in a solid state at 25 °C and 1 atm. For example, the polymer solid electrolyte may not contain liquid. The polymer solid electrolyte may include a polymer, and the polymer may be, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi⁺), and/or any suitable combination thereof. However, the polymer is not limited to the aforementioned examples and may be any suitable material generally available and/or generally utilized in polymer electrolytes in the art. The lithium salt may be any lithium salt available in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, and/or any suitable mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more.

For example, the gel electrolyte may be a polymer gel electrolyte. For example, the gel electrolyte may have a gel state while not containing a polymer.

For example, the polymer gel electrolyte may include a liquid electrolyte and a polymer, or an organic solvent and a polymer having an ion-conducting functional group. For example, the polymer gel electrolyte may be a polymer electrolyte that is in a gel state at 25 °C and 1 atm. For example, the polymer gel electrolyte may have a gel state without containing liquid. The liquid electrolyte utilized in the polymer gel electrolytes may be, for example, a mixture of an ionic liquid, a lithium salt, and an organic solvent; a mixture of a lithium salt and an organic solvent; a mixture of an ionic liquid and an organic solvent; and/or any suitable mixture of a lithium salt, an ionic liquid, and an organic solvent. The polymer utilized in the polymer gel electrolyte may be (*e.g*., may be selected from among) polymers utilized in solid polymer electrolytes. The organic solvent may be (*e.g*., may be selected from among) organic solvents utilized in liquid electrolytes. The lithium salt may be (*e.g*., may be selected from among) lithium salts utilized in polymer solid electrolytes. The ionic liquid may refer to a room-temperature molten salt or a salt that is in a liquid state at room temperature, which only includes (*e.g*., consists of) ions and has a melting point of room temperature or lower. For example, the ionic liquid may be at least one of (*e.g*., at least one selected from among) compounds containing: a) at least one cation of (*e.g*., selected from among) ammonium, pyrrolidinium, pyridinium, pyrimidinium, imidazolium, piperidinium, pyrazolium, oxazolium, pyridazinium, phosphonium, sulfonium, triazolium, and/or any suitable mixture thereof; and b) at least one anion of (*e.g*., selected from among) BF₄⁻, PF₆⁻, AsF₆⁻, SbF₆⁻, AlCl₄⁻, HSO₄⁻, ClO₄⁻, CH₃SO₃⁻, CF₃CO₂⁻, CI-, Br, I-, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and/or (CF₃SO₂)₂N⁻. For example, the polymer solid electrolyte may form (or provide) a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or more, 1,000 Dalton or more, 10,000 Dalton or more, 100,000 Dalton or more, or 1,000,000 Dalton or more.

### Solid Electrolyte Layer: Binder

The solid electrolyte layer 30 may further include, for example, a binder. The binder included in the solid electrolyte layer 30 may be, for example, styrene butadiene rubber (SBR), polytetrafluoroethylene, polyvinylidene fluoride, polyethylene, and/or the like, but without being limited to the aforementioned examples, and may utilize any suitable binder generally available and/or generally utilized in the art. The binder in the solid electrolyte layer 30 may be identical to or different from a binder included in the cathode active material layer 12 and the anode active material layer 22. In one or more embodiments, the binder may not be provided.

The content (*e.g*., amount) of the binder included in the solid electrolyte layer 30 may be, 0.1 wt% to 10 wt%, 0.1 wt% to 5 wt%, 0.1 wt% to 3 wt%, 0.1 wt% to 1 wt%, 0 wt% to 0.5 wt%, or 0 wt% to 0.1 wt%, with respect to a total weight of the solid electrolyte layer 30.

### Method of Preparing Composite Cathode Active Material

To prepare a composite cathode active material, a composition containing Li₂S may be ball-milled to produce primary particles including a Li₂S-containing composite.

Once the primary particles are thus prepared, the primary particles may be granulated to produce secondary particles, thereby producing the composite cathode active material. Because the secondary particles are prepared by granulating the primary particles, the D10 of the secondary particles may be 5 µm or more.

According to one or more embodiments, the primary particles including a Li₂S-containing composite may be prepared as follows: first, preparing a first composition by performing first ball-milling on a composition including Li₂S and a lithium salt; and after injecting a carbon-based material into the first composition, performing second ball-milling on the first composition to thereby prepare the primary particles including a Li₂S-containing composite.

For details of the Li₂S-containing composite, the Li₂S, the lithium salt, and the carbon-based materials, refer to the descriptions above.

According to one or more embodiments, the first ball-milling and the second ball-milling may each independently be performed at 100 rpm to 1,000 rpm for 1 hour to 20 hours. For example, the first ball-milling and the second ball-milling may each independently be performed at 200 rpm to 800 rpm, 300 rpm to 700 rpm, or 400 rpm to 600 rpm. For example, the first ball-milling and the second ball-milling may each independently be performed for 1 hour to 16 hours, 2 hours to 12 hours, or 3 hours to 10 hours.

The preparation of the secondary particles may be carried out through granulation of the primary particles. For example, the granulation may be performed by loading the primary particles into a mixer, such as NOBILTA MINI by Hosokawa Micron Corp., NARA Hybridization System, and/or the like.

For example, the granulation may be carried out by loading the primary particles into a mixer, such as NOBILTA MINI by Hosokawa Micron Corp., NARA Hybridization System, and/or the like, and then performing granulation for 1 minute to 30 minutes, at 1,000 rpm to 9,000 rpm.

For example, the granulation may be carried out by loading the primary particles into a container of NOBILTA MINI by Hosokawa Micron Corp., and prior to performing the granulation, the loading amount of the primary particles being loaded may be 20 vol% to 80 vol%, 30 vol% to 70 vol%, 30 vol% to 60 vol%, or 30 vol% to 50 vol%, with respect to the total volume of the container.

For example, the granulation may be performed for 2 minutes to 25 minutes, 3 minutes to 20 minutes, 5 minutes to 20 minutes, or 10 minutes to 20 minutes. For example, the granulation may be performed at 1,000 rpm to 9,000 rpm, 2,000 rpm to 8,000 rpm, 3,000 rpm to 7,000 rpm, or 4,000 rpm to 6,000 rpm.

The present disclosure will be described in greater detail through the following Examples and Comparative Examples. However, it will be understood that the examples are provided only to illustrate the present disclosure and not to be construed as limiting the scope of the present disclosure.

Here, the listing of steps, tasks, or acts in a particular order should not necessarily means that the present disclosure or claims require that particular order. That is, the general rule that unless the steps, tasks, or acts of a method (e.g., a method claim) actually recite an order, the steps, tasks, or acts should not be construed to require one. Furthermore, any element in a claim that does not explicitly state "means for" performing a specified function, or "step for" performing a specific function, is not to be interpreted as a "means" or "step" clause as specified in 35 U.S.C. § 112(f). In particular, the use of "step of" or "act of" in the claims herein is not intended to invoke the provisions of 35 U.S.C. § 112(f).

### Preparation of Composite Cathode Active Material

### Preparation Example 1: Li₂S-LiI-CNF, 3 Steps, Secondary Particle D10 = 5.1 µm

### Step 1

Li₂S and LiI were mixed in a weight ratio of 30 : 20. The resulting mixture was mechanically milled utilizing a ball mill, to produce a Li₂S-LiI composite. The milling was performed at 600 rpm for 10 hours at 25 °C. The milling energy applied to a sample during milling was 28 G.

### Step 2

The Li₂S-LiI composite and carbon nanofibers (CNFs) were mixed in a weight ratio of 50 : 10. A Li₂S-LiI-CNF composite was prepared by mechanically milling the mixture utilizing a ball mill. The milling was performed at 600 rpm for 10 hours at 25 °C. The milling energy applied to a sample during milling was 28 G.

The Mohs hardness of Li₂S was 0.6, the Mohs hardness of LiI was 2.0, and the Mohs hardness of carbon nanofiber (CNF) was 1.5.

### Step 3

The Li₂S-LiI-CNF composite was loaded into a container of a NOBILTA MINI by Hosokawa Micron Corp. The loading amount was 40 vol% with respect to the total volume of the container. Then, it was operated at 5,000 rpm for 10 minutes to produce the secondary particles. Secondary particles of the Li₂S-LiI-CNF composite were utilized as a composite cathode active material.

The D10 (*e.g*., D10 size) of the Li₂S-LiI-CNF composite secondary particles was measured utilizing a laser scattering particle size distribution analyzer (HORIBA, LA-920) and refers to the value of median particle diameter (D10) at the point where 10 % of the total volume of the particles in a sample has been accumulated from the smallest particle size. The D10 (*e.g*., D10 size) of the Li₂S-LiI-CNF composite secondary particles was 5.1 µm. The D50 (*e.g*., D50 size) of the Li₂S-LiI-CNF composite secondary particles was measured utilizing a laser scattering particle size distribution analyzer (HORIBA, LA-920) and refers to the value of median particle diameter (D50) at the point where 50 % of the total volume of the particles in a sample has been accumulated from the smallest particle size The D90 (*e.g*., D90 size) of the Li₂S-LiI-CNF composite secondary particles was measured utilizing a laser scattering particle size distribution analyzer (HORIBA, LA-920) and refers to the value of median particle diameter (D90) at the point where 90 % of the total volume of the particles in a sample has been accumulated from the smallest particle size.

### Preparation Example 2: Li2S-Lil-CNF, 3 Steps, Secondary Particle D10 = 7.2 µm

A composite cathode active material was prepared following substantially the same process as in Example 1, except that the secondary particles were prepared under the conditions of 3,000 rpm and 10 minutes in Step 3, and the D10 of the secondary particles thus prepared was 7.2 µm.

### Preparation Example 3: Li2S-Lil-CNF, 3 Steps, Secondary Particle D10 = 9.2 µm

A composite cathode active material was prepared following substantially the same process as in Example 1, except that the secondary particles were prepared under the conditions of 5,000 rpm and 5 minutes in Step 3, and the of the secondary particles thus prepared was 9.2 µm.

### Preparation Example 4: Li₂S-LiI-CNF, 3 Steps, Secondary Particle D10 = 7.4 µm

In Step 3, the Li₂S-LiI-CNF powder was pre-mixed with 5 wt% of a moisture-free xylene solvent by utilizing a Thinky mixer, and the resulting mixture was loaded into a container of a NOBILTA MINI for secondary granulation. A composite cathode active material was prepared following substantially the same process as in Example 1, except that the secondary particles were prepared with xylene as an additive during the secondary granulation, and the D10 of the secondary particles thus prepared was 7.4 µm.

### Comparative Preparation Example 1: Li₂S-LiI-CNF, 3 Steps, Secondary Particle D10 = 3.36 µm

A composite cathode active material was prepared following substantially the same process as in Example 1, except that the secondary particles were prepared under the conditions of 9,000 rpm and 10 minutes in Step 3, and the D10 size (e.g., diameter or major axis) of the secondary particles prepared with the modified granulation conditions for the secondary particles was 3.36 µm.

### Comparative Preparation Example 2: Li₂S-LiI-CNF, 2 Steps, Primary Particle D10 = 2.4 µm

### Step 1

Li₂S and LiI were mixed in a weight ratio of 30 : 20. The resulting mixture was mechanically milled utilizing a ball mill, to produce a Li₂S-LiI composite. The milling was performed at 600 rpm for 10 hours at 25 °C. The milling energy applied to a sample during milling was 28 G.

### Step 2

The Li₂S-LiI composite and carbon nanofibers (CNFs) were mixed in a weight ratio of 50 : 10. A Li₂S-LiI-CNF composite was prepared by mechanically milling the mixture utilizing a ball mill. The milling was performed at 600 rpm for 10 hours at 25 °C. The milling energy applied to a sample during milling was 28 G.

The Mohs hardness of Li₂S was 0.6, the Mohs hardness of LiI was 2.0, and the Mohs hardness of carbon nanofiber (CNF) was 1.5. Primary particles of Li₂S-LiI-CNF composite were utilized as a composite cathode active material. The D10 of primary particles of the Li₂S-LiI-CNF composite was 2.4 µm.

### Evaluation Example 1

D10, D50, and D90 of the composite cathode active materials according to Preparation Examples 1 to 4 and Comparative Preparation Examples 1 and 2 were measured utilizing a particle size analyzer. Particle diameters were measured by a laser scattering particle size distribution analyzer (LA-920 manufactured by HORIBA). For example, wherein the value of median particle diameter at the point where 10 % of the total volume of the particles in a sample has been accumulated from the smallest particle size was taken as D10, the value of median particle diameter at the point where 50 % of the total volume of the particles in a sample has been accumulated from the smallest particle size was taken as D50, and the value of median particle diameter at the point where 90 % of the total volume of the particles in a sample has been accumulated from the smallest particle size was taken as D90. As the solvent for measurements, moisture-free xylene was utilized. The measurement results are shown in Table 1.

**Table 1**

| | D10 | D50 | D90 |
|---|---|---|---|
| Preparation Example 1 | 5.1 | 10.6 | 37.7 |
| Preparation Example 2 | 7.2 | 12.7 | 50.7 |
| Preparation Example 3 | 9.2 | 16.4 | 28.8 |
| Preparation Example 4 | 7.4 | 12.9 | 22.4 |
| Comparative Preparation Example 1 | 3.36 | 6.5 | 15.9 |
| Comparative Preparation Example 2 | 2.4 | 8.1 | 31.7 |

### Preparation of Cathode and Secondary Battery

### Example 1

### Preparation of Cathode

As a cathode active material, the secondary particles of the Li₂S-LiI-CNF composite prepared in Preparation Example 1 were prepared. As a solid electrolyte, argyrodite-type or kind Li₆PS₅Cl crystals (D50=3.0 µm, crystalline) were prepared. PTFE was prepared as a binder. The aforementioned materials were mixed in a weight ratio of composite cathode active material: solid electrolyte : binder = 60 : 40 : 1.2 to prepare a cathode mixture. The cathode mixture was obtained by dry mixing utilizing a blender.

The cathode mixture was placed on one side of a cathode current collector made of an aluminum foil carbon-coated on one side thereof, and was plate-pressed for 10 minutes with a pressure of 200 MPa to produce a cathode. The thickness of the cathode was 120 µm. The thickness of the cathode active material layer was 100 µm, and the thickness of the carbon-coated aluminum foil was 20 µm. The cathode active material layer and the cathode current collector had the same surface area.

### Preparation of Anode

As an anode current collector, a 10 µm-thick stainless steel (SUS) foil was prepared. As an anode active material, carbon black (CB) having a primary particle diameter of 30 nm and silver (Ag) particles having an average particle diameter of 60 nm were prepared.

In a container containing 4 grams of mixed powder containing CB and Ag particles in a weight ratio of 3:1, 4 grams of an n-methyl-2-pyrrolidone (NMP) solution containing 7 wt% of a polyvinylidene fluoride (PVDF) binder (#9300, KUREHA) were added to prepare a mixed solution. The prepared mixed solution was stirred while gradually adding NMP to the mixed solution, to produce a slurry. The produced slurry was applied onto a stainless steel (SUS) sheet by utilizing a bar coater, and then dried in open air at 80 °C for 10 minutes, and vacuum-dried at 40 °C for 10 hours to prepare a laminate. The prepared laminate was cold roll-pressed to flatten the surface thereof, to prepare an anode having the first anode active material layer/anode current collector structure. The thickness of the first anode active material layer was 15 µm. The first anode active material layer and the anode current collector had the same surface area.

### Preparation of Solid Electrolyte Layer

To argyrodite-type or kind Li₆PS₅Cl solid electrolyte crystals (D50=3.0 µm, crystalline), 1.5 parts by weight of an acryl-based binder with respect to 98.5 parts by weight of the solid electrolyte was added, to prepare a mixture. The prepared mixture was stirred while adding octyl acetate thereto, to prepare a slurry. The prepared slurry was applied onto a 15-µm thick nonwoven fabric placed on a 75 µm-thick PET substrate by utilizing a bar coater, and dried in open air at a temperature of 80 °C for 10 minutes to prepare a laminate. The prepared laminate was vacuum-dried at a temperature of 80 °C for 2 hours to prepare a solid electrolyte layer.

### Inactive Member

A slurry obtained by mixing cellulose fibers, glass fibers, aluminum hydroxide (Al(OH)₃), an acryl-based binder, and a solvent was molded in the form of a gasket, and then the solvent was removed therefrom to produce a flame-retardant inactive member.

The weight ratio of pulp fibers (cellulose fibers) : glass fibers : aluminum hydroxide (Al(OH)₃): acryl-based binder was 20 : 8 : 70 : 2. The thickness of the inactive member was 120 µm.

Before placing the produced flame-retardant inactive member on the solid electrolyte layer, the flame-retardant inactive member was thermally treated under vacuum at 80 °C for 5 hours to remove moisture and/or the like therefrom.

### Preparation of All-Solid Secondary Battery

Referring to FIG. 4, the solid electrolyte layer was arranged on the anode such that the first anode active material layer was in contact with the solid electrolyte layer, and the cathode was arranged on the solid electrolyte layer. A gasket was arranged around the cathode while surrounding the cathode to thereby prepare a laminate. The thickness of the gasket was 120 µm. The flame-retardant inactive member was utilized as the gasket. The gasket was arranged so as to be in contact with a side surface of the cathode, and a top surface of the solid electrolyte. The cathode was arranged in the center portion of the solid electrolyte layer, and the gasket was placed extending to a terminal portion of the solid electrolyte layer, while around (*e.g*., surrounding) the cathode. The surface area of the cathode was 90 % of the surface area of the solid electrolyte layer, and the gasket was arranged in the entire remaining 10 % of the surface area of the solid electrolyte layer that does not have the cathode arranged therein.

The prepared laminate was plate-pressed with a pressure of 500 MPa at 85 °C for 30 minutes. By such a press treatment, the solid electrolyte layer was sintered, resulting in the improvement of the battery performance. The thickness of the sintered solid electrolyte layer was 45 µm. The density of the argyrodite-type or kind crystal Li₆PS₅Cl solid electrolyte included in the sintered solid electrolyte layer was 1.6 g/cc. The surface area of the solid electrolyte layer was the same as the surface area of the anode.

The pressed laminate was then placed in a pouch and vacuum-sealed, to produce an all-solid secondary battery. A part of the cathode current collector and a part of the anode current collector were extended out of the sealed battery and utilized as a cathode terminal and an anode terminal, respectively.

### Examples 2 to 4

A cathode and an all-solid secondary battery were prepared following substantially the same process as in Example 1, except that the composite cathode active materials prepared in Preparation Examples 2 to 4 were respectively utilized.

### Comparative Examples 1 and 2

A cathode and an all-solid secondary battery were prepared following substantially the same process as in Example 1, except that the composite cathode active materials prepared in Comparative Preparation Examples 1 and 2 were respectively utilized.

### Evaluation Example 2: Charge-Discharge Test

The all-solid secondary batteries prepared in Examples 1 to 4 and Comparative Examples 1 and 2 were evaluated for charge-discharge characteristics by the following charge-discharge test.

The charge-discharge test was performed with the all-solid secondary battery placed in a constant-temperature bath at 45 °C.

In the first cycle, each battery was charged at a constant current of 0.1 C for 12.5 hours until the battery voltage reached a voltage of 2.5 V to 2.8 V. Then, the battery was discharged at a constant current of 0.1 C for 12.5 hours until the battery voltage reached 0.3 V.

The discharge capacity in the first cycle was utilized as a standard capacity. The standard capacity is expressed as specific capacity of Li₂S in Table 1.

After the first cycle, charging and discharging were performed up to 150 cycles under the same conditions as the first cycle. The measurement results are shown in Table 2. Initial efficiency is represented by Equation 1. Initial Efficiency [%] = [Discharge Capacity in 1st Cycle/Charge Capacity in 1st Cycle] × 100

The cycle number refers to the number of cycles desired or required for the discharge capacity to decrease to 80 % of the standard capacity after the first cycle. The higher the cycle number, the better lifespan characteristics the battery is considered to have.

**Table 2**

| | Composite Cathode Active Material | | Specific capacity (mAh/g) | Initial efficiency [%] | Cycle number [cycles] |
|---|---|---|---|---|---|
| | Type | D10 | | | |
| Example 1 | Li₂S-LiI-CNF composite secondary particles | 5.1 | 955 | 82.9 | 52 |
| Example 2 | Li₂S-LiI-CNF composite secondary particles | 7.2 | 946 | 82.8 | 50 |
| Example 3 | Li₂S-LiI-CNF composite secondary particles | 9.2 | 920 | 81.1 | 37 |
| Example 4 | Li₂S-LiI-CNF composite secondary particles | 7.4 | 914 | 83.1 | 33 |
| Comparative Example 1 | Li₂S-LiI-CNF composite secondary particles | 3.36 | 412 | 76.2 | 10 |
| Comparative Example 2 | Li₂S-LiI-CNF composite primary particles | 2.4 | 919 | 78.1 | 25 |

As shown in Table 2, the all-solid secondary batteries of Examples 1 to 4 showed improved discharge capacity (*e.g*., specific capacity), initial efficiency, and lifespan characteristics in comparison to the all-solid secondary batteries of Comparative Examples 1 and 2.

According to aspects of one or more embodiments of the present disclosure, the cathode active material, due to having a relatively low proportion of fine particles having a small particle size, can reduce side reactions caused by such fine particles, and has excellent or suitable ionic conductivity and electronic conductivity, and thus can provide an all-solid secondary battery having improved charge-discharge characteristics.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. A cathode active material comprising:
secondary particles in which primary particles including a Li₂S-containing composite are agglomerated,
wherein a D10 size of the secondary particles is 5 µm or more.

2. The cathode active material as claimed in claim 1, wherein the D10 size of the secondary particles is 5 µm to 10 µm , a D50 size of the secondary particles is 9 µm to 20 µm, and a D90 size of the secondary particles is 16 µm to 60 µm.

3. The cathode active material as claimed in claim 1 or 2, wherein the Li₂S-containing composite comprises a composite of Li₂S and a lithium salt, preferably the lithium salt is a binary compound or a ternary compound,
the binary compound comprising Lil, LiBr, LiCI, LiF, LiH, Li₂O, Li₂Se, Li₂Te, LisN, LisP, Li₃As, LisSb, Li₃Al₂, LiBs, or a combination thereof, and
the ternary compound comprising LisOCI, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, Li₃BN₂, or a combination thereof.

4. The cathode active material as claimed in any of claims 1 to 3, wherein the Li₂S-containing composite comprises a composite of Li₂S and a lithium salt, wherein the composite of Li₂S and the lithium salt has the formula Li₂S-LiₐX_{b}, and wherein 1≤a≤5, 1≤b≤5, and X is I, Br, Cl, F, H, O, Se, Te, N, P, As, Sb, Al, B, OCI, PF₆, BF₄, SbF₆, AsF₆, ClO₄, AlO₂, AlCl₄, NOs, COs, BH₄, SO₄, BOs, PO₄, NCl, NCl₂, BN₂, or a combination thereof.

5. The cathode active material as claimed in any of claims 1 to 4, wherein the Li₂S-containing composite comprises a composite of Li₂S and a lithium salt, wherein a molar ratio of the Li₂S to the lithium salt in the Li₂S-containing composite is 50:50 to 95:5.

6. The cathode active material as claimed in any of claims 1 to 5, wherein the Li₂S-containing composite further comprises a carbon-based material, preferably
wherein the carbon-based material comprises a fibrous carbon-based material,
wherein the fibrous carbon-based material comprises a carbon nanostructure,
wherein the carbon nanostructure comprises a carbon nanofiber, a carbon nanotube, a carbon nanobelt, a carbon nanorod, or a combination thereof.

7. The cathode active material as claimed in claim 6,
wherein an amount of the carbon-based material is 1 wt% to 20 wt% with respect to a total weight of the Li₂S-containing composite.

8. A cathode (10) for an all-solid secondary battery, the cathode (10) comprising:
a cathode current collector (11); and
a cathode active material layer (12) on the cathode current collector (11) and comprising the cathode active material as claimed in any of claims 1 to 7.

9. The cathode (10) as claimed in claim 8,
wherein an amount of the cathode active material is 40 wt% to 90 wt% with respect to a total weight of the cathode active material layer (12), and/or
wherein the cathode active material layer (12) further comprises a solid electrolyte, preferably
wherein the solid electrolyte is a sulfide-based solid electrolyte, and
wherein the sulfide-based solid electrolyte is at least one selected from among Li₂S-P₂S₅ and Li₂S-P₂S₅-LiX, wherein X is a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; Li₇₋ₓPS₆₋ₓIₓ, wherein 0≤x≤2; and combinations thereof.

10. The cathode (10) as claimed in claim 8 or 9,
wherein the cathode active material layer (12) further comprises a solid electrolyte, wherein the solid electrolyte is a sulfide-based solid electrolyte, wherein the sulfide-based solid electrolyte comprises an argyrodite-type solid electrolyte,
wherein the argyrodite-type solid electrolyte comprises one or more selected from among Li₆PS₅Cl, Li₆PS₅Br, and LisPSsl, and the argyrodite-type solid electrolyte has a density of 1.5 g/cc to 2.0 g/cc.

11. The cathode (10) as claimed in any of claims 8 to 10, wherein the cathode active material layer (12) further comprises one or more selected from among a binder and a conductive material.

12. The cathode (10) as claimed in any of claims 8 to 11,
wherein the cathode current collector (11) comprises a base film and a metal layer on at least one side of the base film,
wherein the base film comprises a polymer, the polymer comprising polyethylene terephthalate (PET), polyethylene (PE), polypropylene (PP), polybutylene terephthalate (PBT), polyimide (PI), or a combination thereof, and the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

13. An all-solid secondary battery (1) comprising:
a cathode (10);
an anode (20); and
a solid electrolyte layer (30) between the cathode (10) and the anode (20),
wherein the cathode (10) comprises the cathode (10) as claimed in any of claims 8 to 12.

14. The all-solid secondary battery (1) as claimed in claim 13,
wherein the solid electrolyte layer (30) comprises a solid electrolyte, a gel electrolyte, or a combination thereof,
the solid electrolyte comprising a sulfide-based solid electrolyte, an oxide-based solid electrolyte, a polymer solid electrolyte, or a combination thereof, and
the gel electrolyte comprising a polymer gel electrolyte.

15. A method of preparing a composite cathode active material, the method comprising:
preparing primary particles comprising a Li₂S-containing composite by ball-milling a composition containing Li₂S; and
preparing secondary particles by granulation of the primary particles,
wherein a D10 size of the secondary particles is 5 µm or more, preferably wherein the preparing of the primary particles comprising the Li₂S-containing composite comprises:
preparing a first composition comprising first particles by performing a first ball-milling on a composition containing Li₂S and a lithium salt;
injecting a carbon-based material into the first composition; and
after injecting the carbon-based material, performing a second ball-milling on the first composition to produce the primary particles comprising the Li₂S-containing composite.
